# EUROPÄISCHE PATENTSCHRIFT

(11) **EP 4 261 492 B1**
(45) Veröffentlichungstag und Bekanntmachung des Hinweises auf die Patenterteilung: **16.09.2026**
(21) Anmeldenummer: 23166928.4
(22) Anmeldetag: 06.04.2023
(51) Int. Cl.: F41G 7/22, F41H 11/02, F42B 15/01, G05D 1/00

(54) **VERFAHREN ZUR MIDCOURSE-LENKUNG EINES IM SCHUB STEUERBAREN FLUGKÖRPERS**
METHOD FOR MID-OURSE GUIDANCE OF A MISSILE WHICH CAN BE DRIVEN IN THRUST
PROCÉDÉ DE PILOTAGE MIDCOURSE D'UN MISSILE À PROPULSION CONTRÔLÉE

(30) Priorität: 13.04.2022 DE 102022001286
(43) Veröffentlichungstag der Anmeldung: 18.10.2023
(73) Patentinhaber: Diehl Defence GmbH & Co. KG, 88662 Überlingen (DE)
(72) Erfinder: Reis, Patrick, 88662 Überlingen (DE); Kuhn, Thomas, 88633 Heiligenberg (DE)
(74) Vertreter: Diehl Patentabteilung

(56) Entgegenhaltungen:
- EP-A1- 1 174 675
- DE-A1- 102010 032 281
- DE-A1- 3 927 299
- DE-T2- 69 931 216

## Beschreibung

Die Erfindung betrifft ein Verfahren zur Midcourse-Lenkung eines Flugkörpers, der durch ein im Schub steuerbares Triebwerk angetriebenen ist, zum Bekämpfen eines Ziels.

Zur Bekämpfung von Seezielen durch einen Flugkörper muss dieser in der Regel weite Strecken überwinden und hierbei - zumindest auf den letzten Kilometern - möglichst tief fliegen, um spät entdeckt zu werden. Zudem sind gegebenenfalls gegnerische Verteidigungen weiträumig zu umfliegen. Diese Randbedingungen erfordern viel Treibstoff, sodass die Reichweite durch den beschränkten Treibstoffvorrat eingeschränkt ist.

Die DE 699 31 216 T2 beschreibt eine Optimallenkung eines Flugkörpers zu einem Ziel, bei dem ein neuronales Netzwerk zur Ausgabe eines optimalen Flugablaufs verwendet wird.

Es ist daher eine Aufgabe der Erfindung, ein Verfahren zum treibstoffeffizienten Lenken eines Flugkörpers anzugeben und einen Flugkörper, der zum treibstoffeffizienten Lenken in der Lage ist.

Die auf das Verfahren gerichtete Aufgabe wird durch ein Verfahren gemäß den Merkmalen von Patentanspruch 1 gelöst, bei dem in einem Planungszyklus
a) eine Prädiktion einer möglichen Flugbahn des Flugkörpers mit einem Prädiktor erstellt wird und die Flugbahn bewertet wird,
b) weitere Prädiktionen möglicher Flugbahnen des Flugkörpers zum Ziel berechnet werden durch mehrfache Variationen von Steuergrößen des Flugkörpers, wobei die Flugbahnen jeweils bewertet werden, und
c) anhand der Bewertungen eine der Flugbahnen des Flugkörpers ausgewählt wird, und
ein erstes Teilstück dieser Flugbahn abgeflogen und der Planungszyklus mehrfach für nachfolgende Teilstücke wiederholt wird.

Die Erfindung geht von der Überlegung aus, dass übliche im Unterschall fliegende Seezielflugkörper kaum Probleme mit ihrem Treibstoffverbrauch haben. Auch Ausweichmanöver im Unterschallbereich kurz vor dem Ziel zum Ausweichen von Abwehrflugkörpern kosten nicht so viel Treibstoff, dass dies die Missionsplanung und - durchführung erheblich beeinflusst. Zum Bewältigen sehr großer Reichweiten im Bereich von 1.000 km und mehr sollte ein Überschallflug ausgeführt werden, zweckmäßigerweise mit mehr als 3 Mach. Bei diesen Geschwindigkeiten ist der Treibstoffverbrauch ein kritischer Parameter, vor allem, da Ausweichmanöver mit dieser Geschwindigkeit zwar deutlich effektiver sind, aber ein Vielfaches an Treibstoff kosten, wie im Unterschallbereich.

Das Fliegen in unteren Luftschichten mit so hoher Geschwindigkeit kostet so viel Treibstoff, dass hohe Reichweiten nicht zu bewältigen sind. Der Überschallflugkörper muss daher in große Höhen aufsteigen, um in dünner Luft zu fliegen. Die Reichweite kann in 20 km Höhe um bis zum Faktor 10 gegenüber einem Fliegen direkt über dem Meer gesteigert werden. In großer Höhe ist jedoch darauf zu achten, dass die Luft nicht zu dünn wird und das Triebwerk aufgrund mangelnden Staudrucks verlöscht.

Kritische Randbedingungen, wie dünne Luft oder das erzwungene Fliegen von Umwegen, um feindlichem Feuer auszuweichen, erfordern eine hohe Robustheit der Flugplanung, auch wenn die Annahmen von der Realität abweichen. Die Robustheit kann durch die Anwendung der Model Predictive Control (MPC) (Modellprädiktive Regelung) auf die Lenkung des Flugkörpers erhöht werden. Bei der MPC kann ein dynamisches, zeitdiskretes Modell der Flugsteuerung verwendet werden, um die zukünftige Lenkung des Flugkörpers in Abhängigkeit von freien Steuerparametern zur Lenkung des Flugkörpers zu berechnen. Dies ermöglicht die Berechnung von Steuerparametern für eine treibstoffeffiziente Lenkung. Jede der vielen prädizierten Flugbahnen kann auf ihren voraussichtlichen Treibstoffverbrauch und auf andere Gütekriterien untersucht werden, die in einer Gütefunktion oder Kostenfunktion die Güte oder das Güteergebnis der Flugbahn bestimmen. Die Anwendung der MPC auf die Lenkung des Flugkörpers kann als Model Predictive Guidance (MPG) bezeichnet werden.

Die Eingangsgrößen der Lenkung, die die Größen der Steuerparameter der Lenkung enthalten, also die Steuergrößen, können in einem mathematischen Deskriptor, dem Prädiktor, zusammengefasst werden. Der Prädiktor enthält also neben einer Funktion zur Berechnung der Flugbahn auch die Steuergrößen der Lenkung des Flugkörpers. Mittels des Prädiktors lässt sich der Flug des Flugkörpers vorhersagen. Dieser vorausberechnete Flug muss am Anfang des Verfahrens nicht besonders gut sein, da die Steuergrößen variiert und im Laufe des Verfahrens verbessert werden. Hierdurch wird die Flugbahn zum Ziel, also in Richtung zum Ziel, verbessert. Durch die Variation der Steuergrößen liegen - ausgehend vom gleichen Anfangspunkt der Berechnung, der der aktuelle Flugpunkt des Flugkörpers sein kann - mit dem Prädiktor mehrere verschiedene Flugbahnen zum Ziel vor. Anhand von vorgegebenen Gütekriterien können die verschiedenen Flugbahnen bewertet werden und die Flugbahn mit der besten Güte kann ausgewählt werden. Die dieser Flugbahn zugrundeliegenden Steuergrößen können zum Lenken des Flugkörpers entlang eines Teilstücks dieser Flugbahn verwendet werden. Dieser Planungszyklus mit seinen vielen möglichen Flugbahnen wird im Laufe des Flugs des Flugkörpers vielfach wiederholt, sodass der Flug nach jedem Teilstück des Flugs korrigiert werden kann.

Der Flugkörper ist entsprechend der Erfindung ein Bodenzielflugkörper zum Bekämpfen eines als Seeziel oder als landgestütztes Bodenziel ausgeführten Ziels. Sein Triebwerk ist im Schub steuerbar und kann ein Luft atmendes Triebwerk sein. Möglich ist auch ein im Schub steuerbares Festbrennstofftriebwerk, beispielsweise ein Ramjet. Der Treibstoff des Flugkörpers kann Flüssigtreibstoff oder Festbrennstoff sein. Der Flugkörper kann ein unbemanntes Luftfahrzeug sein. Der Flugkörper ist zweckmäßigerweise ein Überschallflugkörper, insbesondere ein Überschallseezielflugkörper. Sein Triebwerk ist vorteilhafterweise für Fluggeschwindigkeiten über 2,5 Mach, insbesondere über 3 Mach, ausgeführt. Der Flugkörper verfügt zweckmäßigerweise über die Fähigkeit zum Flug in Flughöhen über 15 km, insbesondere über 20 km, und hat insbesondere eine Reichweite von über 1.000 km.

Der Flug des Flugkörpers kann in eine Startphase, eine Midcourse-Phase und ein Endgame unterteilt sein. Die Midcourse-Phase beginnt nach der Startphase, in der der Flugkörper startet und grob in Richtung zum Ziel lenkt. Das Ende der Midcourse-Phase kann auf unterschiedliche Weise erfolgen: Sie kann mit einem Aufschalten eines Suchers des Flugkörpers auf das Ziel beendet sein. Ebenfalls ist es möglich, dass sie durch das Erreichen eines Annäherungsgebiets endet, wie einem Bekämpfungsgebiet, in dem eine aktive Bekämpfung durch das Ziel erwartet wird oder möglich ist, also das Gebiet, in dem der Flugkörper einem Treffer einer Bekämpfung durch das Ziel ausgesetzt sein kann und in dem infolgedessen Ausweichbewegungen nötig sind. Auch möglich ist das Ende der Midcourse-Phase durch den Beginn eines Abtauchens in eine Sea-Skimming-Phase, also einen Flug direkt über der Wasseroberfläche, oder mit Beginn der Sea-Skimming-Phase. Die Flugkörperlenkung innerhalb der Midcourse-Phase wird als Midcourse-Lenkung verstanden.

Ein Durchlauf eines Planungszyklus kann die Schritte a) bis c) umfassen. Mehrere Durchläufe bilden einen Planungszyklus. Mehrere Planungszyklen können in einen MPG-Zyklus zusammengefasst werden. In einem Planungszyklus werden viele mögliche Flugbahnen, erfindungsgemäß ausgehend vom aktuellen Flugpunkt, berechnet und eine von ihnen wird ausgewählt und als Grundlage der Steuerung des Flugs des Flugkörpers verwendet. Der Planungszyklus wird im Laufe des Flugs wiederholt, sodass eine repetitive zeitliche Wiederholung der Variationen der Flugbahn erfolgt, insbesondere von jeweils anderen aktuellen Flugpunkten des Flugkörpers. Das Variieren der berechneten Flugbahn bzw. der Steuergrößen des Prädiktors und das Aussuchen der geeignetsten Flugbahn entspricht einem Optimierungsverfahren zur Optimierung der Flugkörperflugbahn. Es ist hierbei jedoch nicht notwendig, dass ein Optimum der Flugbahn erreicht wird, denn bereits eine Verbesserung gegenüber einer anfänglichen Flugbahn oder ein temporäres Optimum, wie die temporär beste verfügbare Flugbahn, ist ausreichend.

Der Prädiktor enthält eine oder mehrere Funktionen und mathematische Größen, wie Skalare, Vektoren, und/oder andere Daten, die eine Flugbahn mathematisch beschreiben. Der Prädiktor kann eine Anzahl von Differentialgleichungen enthalten, die beispielsweise numerisch mittels Runge-Kutta-Integration gelöst werden. Der Prädiktor kann auch einen inertialen Zustand, wie den aktuellen Flugpunkt, enthalten, sodass eine Flugbahn ausgehend vom inertialen Zustand anhand der Größen mathematisch beschrieben wird. Der inertiale Zustand muss jedoch nicht Bestandteil des Prädiktors sein, sondern kann auch zusätzlich herangezogen werden zur Beschreibung der Bahn. Die Größen können Steuergrößen, also Größen von Steuerparametern des Flugkörpers sein. Die Steuerparameter sind zweckmäßigerweise Parameter, die einen Einfluss auf den Flug des Flugkörpers haben und steuerbar sind, wie Querbeschleunigungen in zwei zweckmäßigerweise orthogonale Raumrichtungen und insbesondere auch ein steuerbarer Vorschub des Triebwerks.

Um eine vorteilhafte Flugbahn zu ermitteln, werden weitere mögliche Flugbahnen des Flugkörpers zum Ziel prädiziert. Hierfür werden Steuergrößen des Flugkörpers mehrfach verändert. Die Steuerparameter an sich können in der Variation gleich bleiben, nur ihre Steuergrößen, wie Werte, Vektoren oder Matrizen werden verändert. Jede Flugbahn wird bewertet. Es kann die Flugbahn insgesamt bewertet werden oder Flugeigenschaften in einem vorbestimmten Annäherungsgebiet, z.B. bei Erreichen des Annäherungsgebiets oder eines vorbestimmten Radius um das Ziel, oder an einem vorbestimmten Flugpunkt, insbesondere im Ziel. Die Flugbahn bzw. Flugeigenschaften in einem Flugpunkt können anhand von Gütekriterien bewertet werden.

Eine Bewertung der Flugbahn bzw. der Flugeigenschaften führt zu einem Güteergebnis, wie einem Gütevektor, einem Gütewert oder einer Gütefunktion. Die Gütekriterien können in einer Gütefunktion oder Kostenfunktion zusammengefasst werden, sodass den mehreren Gütekriterien verschiedene Gewichtungen in der Kostenfunktion gegeben werden können. Anhand der Kostenfunktion mit ihren mehreren Gütekriterien kann unter Verwendung der Flugeigenschaften ein Güteergebnis bzw. eine Güte berechnet werden. Diese dient der Auswahl der Flugbahn, beispielsweise der mit dem besten Güteergebnis. Das kann die Flugbahn mit den geringsten Kosten sein, wobei Kosten bzw. Güteergebnis durch die Kostenfunktion bestimmt werden. Diese Flugbahn kann nun entlang eines ersten bzw. nächstfolgenden Teilstücks abgeflogen werden. Das bedeutet, dass die Steuergrößen des Prädiktors dieser Flugbahn zur Lenkung des Flugkörpers verwendet werden, zumindest dieses Teilstück weit.

Entsprechend der Erfindung fließt in die Bewertung mit ein, wieviel Treibstoff für das Triebwerk in einem Annäherungsgebiet des Flugkörpers um das Ziel rechnerisch noch übrig ist. Auf diese Weise kann anhand der mathematischen Prädiktion abgeschätzt werden, ob der Treibstoff auf der bewerteten Flugbahn ausreicht, um die Mission erfolgreich zu beenden. Reicht der Treibstoff dafür nicht aus, so kann diese Flugbahn verworfen werden. Auf diese Weise kann das Gütekriterium des Treibstoffs dazu verwendet werden, Flugbahnen zu finden, mit denen die Mission voraussichtlich erfolgreich sein wird. Hierbei sollte berücksichtigt werden, dass im Annäherungsgebiet, also bei Erreichen des Annäherungsgebiets oder im Ziel oder dazwischen, noch vorbestimmt genügend Treibstoff vorhanden sein muss, um scharfe Ausweichmanöver zu fliegen.

Bei langen Flugstrecken ist die Flugroute in horizontalen Richtungen im Wesentlichen vorgegeben und kaum mit der Variation der Flugbahnen bzw. Steuergrößen verbesserbar. Sie verläuft geradlinig zum Ziel oder windet sich gezwungenermaßen um No Fly Zones. Gegebenenfalls kann am Ende eine Annäherungsrichtung zum Ziel vorgegeben sein. All diese Parameter sind im Wesentlichen festgelegt und wenn überhaupt nur in gewissen Grenzen variabel. Ausschlaggebend für den Treibstoffverbrauch im Midcourse ist in viel Fällen die Flughöhe, in der die Flugbahn verläuft. Es ist daher entsprechend der Erfindung vorgesehen, dass bei den weiteren Prädiktionen möglicher Flugbahnen die Flughöhe als Funktion über zumindest einen Teil der Flugstrecke zum Ziel als Steuergröße variiert wird. Hierbei ist die Flughöhe zweckmäßigerweise eine Funktion über zumindest einen Abschnitt der Flugbahn, insbesondere über die gesamte Flugbahn vom aktuellen Flugpunkt bis zu einem Annäherungsgebiet. Die Funktion kann eine kontinuierliche Funktion sein oder eine Stufenfunktion, um die Rechnungen zu vereinfachen. Die Flughöhe kann äquivalent zur Steuergröße der Querbeschleunigung nach oben oder unten gesehen werden, um den Flug nach oben oder unten zu ändern. Es wird im Folgenden also nicht immer der Steuerparameter der Querbeschleunigung nach oben und anschließend wieder nach unten zum Einschwenken auf eine hohe und beispielweise horizontale Flugbahn als Steuerparameter betrachtet - obgleich dies eine exaktere Beschreibung wäre - sondern die Flughöhe als Funktion über einen Bahnabschnitt.

Zur Erzeugung der Flugbahnen werden die Steuergrößen variiert. Das kann unter Nutzung eines Suchverfahrens zur numerischen Parameteroptimierung geschehen, z.B. mittels Gauß-Seidel, Newton o.ä. Besonders vorteilhaft ist ein Simplexverfahren, wie nach Nelder-Mead. Das Suchverfahren bearbeitet die variablen Steuerparameter und sucht geeignete Steuergrößen zur Berechnung der nächsten prädizierten Flugbahn aus. Da der Steuerparameter der Flughöhe der wesentlichste Parameter zur Beeinflussung des Treibstoffverbrauchs ist, ist entsprechend der Erfindung vorgesehen, dass das Suchverfahren die Flughöhe als Hauptvariationsparameter verwendet. Der Hauptvariationsparameter kann ein Parameter sein, auf den das Suchverfahren den Schwerpunkt bei der Suche legt.

Das Ausführen des Planungszyklus kann auch ohne ein Abfliegen eines Teilstücks der Flugbahn sinnvoll sein. So kann es, beispielsweise bereits bevor der Flugkörper startet, sinnvoll sein, zunächst herauszufinden, ob das Ziel überhaupt erreichbar und die Mission ausführbar ist - mit allen mit dem Flug dorthin verbundenen Randbedingungen. Ist die Mission nicht ausführbar, so können - bereits vor dem Flug - von den Steuergrößen unabhängige Randbedingungen der Flugbahn verändert werden, und der Planungszyklus kann mehrfach für jeweils veränderte Randbedingungen wiederholt werden. Anhand der Bewertungen der resultierenden Flugbahnen kann nun herausgefunden werden, ob sich hierbei eine Flugbahn findet, mit der die Mission mit ausreichender Wahrscheinlichkeit erfolgreich ausgeführt werden kann.

In einer alternativen Lösung der Aufgabe wird daher ein Verfahren zur Prädiktion einer Midcourse-Lenkung eines Flugkörpers, der durch ein im Schub steuerbares Triebwerk angetriebenen ist, zum Bekämpfen eines Ziels, vorgeschlagen, bei dem erfindungsgemäß vor einem Flug des Flugkörpers in einem Planungszyklus
a) eine Prädiktion einer möglichen Flugbahn des Flugkörpers mit einem Prädiktor erstellt wird und die Flugbahn bewertet wird,
b) weitere Prädiktionen möglicher Flugbahnen des Flugkörpers zum Ziel berechnet werden durch mehrfache Variationen von Steuergrößen des Flugkörpers, wobei die Flugbahnen jeweils bewertet werden, und
c) anhand der Bewertungen eine der Flugbahnen des Flugkörpers ausgewählt wird, und
zumindest eine von den Steuergrößen unabhängige Randbedingung der Flugbahn verändert wird, und der Planungszyklus mehrfach mit zumindest einer veränderten Randbedingung wiederholt wird.

Alle bisherigen und noch folgenden Details können auf beide Verfahren angewendet werden. Es ist beispielsweise zweckmäßig, wenn in einer Missionsplanung vor oder während dem Flug ermittelt wird, ob die Mission am Ziel mit dem vorhandenen Treibstoff möglich ist. Die Mission kann die Bekämpfung des Ziels sein. Die Missionsplanung kann das Abarbeiten des Planungszyklus umfassen. Wenn die Mission nicht möglich sein sollte, kann sie natürlich verworfen werden. Sinnvoller hingegen könnte es sein, die Mission erneut zu planen und hierfür von der Flugkörperlenkung unabhängige Randbedingungen zu verändern, wie das Umfliegen einer No Fly Zone oder eine bisher festgelegte maximale Flughöhe zum Unterfliegen eines Radars. Hierdurch können zwar größere Nachteile eintreten. Es kann jedoch sinnvoll sein, diese Nachteile in Kauf zu nehmen, wenn dadurch die Mission ermöglicht werden könnte. Das Wiederholen des Planungszyklus mit zumindest einer variierten Randbedingung kann so oft ausgeführt werden, bis eine Flugbahn gefunden ist, mit der die Mission - mit ausreichender Wahrscheinlichkeit - erfolgreich ausgeführt werden kann.

Während des Flugs können sich eine oder mehrere Randbedingungen verändern mit dem Ergebnis, dass die Mission unter den neuen Randbedingungen nicht mehr erfolgreich ausgeführt werden kann. Beispielsweise wird eine neue No Fly Zone entdeckt, die durch ein bisher nicht bekanntes und nun neu entdecktes Fahrzeug zum Bekämpfen des Flugkörpers hervorgerufen wird. Der Flugweg zum Ziel kann sich durch das Umfliegen der neuen No Fly Zone so weit verlängern, dass der Treibstoff nicht mehr für scharfe Ausweichmanöver kurz vor dem Ziel ausreichen wird, sodass die Mission als nicht mehr ausführbar bewertet werden muss. Da sich der Flugkörper jedoch bereits auf dem Weg zum Ziel befindet, ist es nicht sinnvoll, die Mission abzubrechen. Zur Lösung dieses Problems wird entsprechend der Erfindung vorgeschlagen, dass während des Flugs eine Missionsplanung durchgeführt wird, in der ermittelt wird, ob die Mission am Ziel mit dem vorhandenen Treibstoff möglich ist, und wenn sie nicht möglich ist, die Planungsphase unter veränderten Randbedingungen erneut ausgeführt wird. Wie bei der Offline-Missionsplanung vor dem Start kann in dieser Online-Missionsplanung während des Flugs zumindest eine Randbedingung verändert werden, ggf. unter Tolerierung der damit verbundenen Nachteile und Risiken. Beispielsweise wird eine No Fly Zone verletzt oder es wird höher geflogen mit dem Risiko des Verlöschens des Triebwerks wegen zu dünner Luft.

Die Randbedingungen können eine oder mehrere der folgenden sein:
- Auf dem Weg vom Start zum Ziel anzufliegende Wegpunkte. Dies können Wegpunkte sein, mit denen eine No Fly Zone umflogen wird, sodass mit dem Umsetzen der Wegpunkt die No Fly Zone jedenfalls ein Stück weit durchflogen wird.
- Eine vorgegebene Flughöhe auf dem Weg vom Start zum Ziel. Die Flughöhe kann eine Funktion über zumindest einen Teil der Flugbahn sein. Beispielsweise ist die vorgegebene Flughöhe ein langsames Absinken des Flugkörpers, sodass er stets unter dem Radar des Ziels bleibt, das aufgrund der Erdkrümmung einen immer niedrigeren Flug zum Ziel hin erzwingt. Beispielsweise wird toleriert, dass der Flugkörper gegen Ende der Flugbahn vom Radar erfasst werden kann.
- Eine vorgegebene Annäherungsgeschwindigkeit des Flugkörpers. Sie ist wichtig, um scharfe Ausweichmanöver ausführen zu können. Wenn zu ihren Lasten die Mission aber noch ausgeführt werden kann, ist eine niedrigere Annäherungsgeschwindigkeit tolerierbar.
- Vorhandener Resttreibstoff bei der Annäherung. Hier verhält es sich wie mit der Annäherungsgeschwindigkeit, da Resttreibstoff und Annäherungsgeschwindigkeit als äquivalent gesehen werden können. Denn mit Resttreibstoff kann die Annäherungsgeschwindigkeit erhöht oder bei Ausweichmanövern gehalten werden.

Häufig wird auf dem Flug des Flugkörpers zum Ziel hin ein Umfliegen einer No Fly Zone als Randbedingung vorgegeben sein. Eine Variation in horizontaler Richtung, also von der No Fly Zone weg oder in sie hinein, wird nur zu geringen Veränderungen des Treibstoffverbrauchs führen. Es ist daher erfindungsgemäß vorgesehen, im Planungszyklus die Flughöhe beim Flug an der No Fly Zone vorbei als Steuergröße zu variieren.

Bei einem schnellen Überschallflug kosten enge Flugradien viel Treibstoff. Soll der Kurs verändert werden, also eine laterale Richtungsänderung der Flugbahn ausgeführt werden, z.B. beim Vorbeiflug an einer No Fly Zone, so ist es sinnvoll, diese Kursänderung so auszuführen, dass die Querbeschleunigung bis zu einem nachfolgenden geradlinigen Flug konstant gehalten wird. Bei einem Flug konstanter Geschwindigkeit heißt das, dass die Kurve auf einem Kreisbahnabschnitt geflogen wird. Hierdurch kann der Treibstoffverbrauch für diese Kursänderung minimiert werden. Zweckmäßigerweise wird die Querbeschleunigung unter einem Midcourse-Grenzwert gehalten. Dieser Grenzwert kann vorgegeben sein, um Treibstoff zu sparen. Natürlich gilt dieser Grenzwert nicht für eventuelle scharfe Ausweichmanöver in einem Annäherungs- bzw. Bekämpfungsgebiet.

Mit gleichem Vorteil wird ein Flugradius um einen Wegpunkt in Abhängigkeit von der Fluggeschwindigkeit festgelegt und die Variation wird unter Berücksichtigung dieses Flugradius ausgeführt. Es ist auch sinnvoll, eine Querbeschleunigung in die Bewertung eingehen zu lassen, was bei der Prädiktion in Richtung zu deren Konstanz führt, da eine höhere Querbeschleunigung negativer in die Bewertung eingeht. Die Querbeschleunigung kann auch durch ein Lenkgesetz konstant gehalten werden. Es kann insofern eine Optimierung des Treibstoffverbrauchs ausgeführt werden durch Ausbalancieren des Treibstoffverlusts durch höhere Querbeschleunigung gegen Treibstoffverlust aufgrund längerer Strecke.

In einer weiteren vorteilhaften Ausführungsform der Erfindung geht in die Bewertung ein Risiko eines Erlöschens des Triebwerks mit ein. Da ein im Schub regulierbares Triebwerk nach einem Erlöschen in der Regel nicht mehr startbar ist, wird ein Erlöschen meist zu einem Scheitern der Mission führen, da die Gleitfähigkeit des Flugkörpers eher gering ist. Das Erlöschen ist daher zu vermeiden. Ein Erlöschen kann insofern in der Bewertung mit einem hohen Kostenfaktor belegt werden, insbesondere dem höchsten verwendeten Kostenfaktor. Bei der Bewertung des Erlöschens können einer oder mehrere der folgenden Kriterien herangezogen werden.
- Ein Erlöschen durch Treibstoffmangel.
- Ein Erlöschen durch einen zu langsamen Flug. Da ein Luft atmendes Triebwerk, beispielsweise ein Turbojet, insbesondere ein Ramjet, einen ausreichenden Staudruck benötigt, kann ein zu langsamer Flug zum Erlöschen des Triebwerks führen.
- Ein Erlöschen durch zu dünne Luft in einer zu großen Flughöhe des Flugkörpers. Auch hier ist ein zu geringer Staudruck zu vermeiden. Es ist hier abzuwägen zwischen einem hohen Flug zum Treibstoffsparen in dünner Luft gegen das Erlöschen des Triebwerks aufgrund zu hohem Flug in zu dünner Luft.

Beim Anflug auf das Ziel ist es möglichst zu vermeiden, dass der Flugkörper durch ein Zielradar oder ein Radar einer anderen, das Ziel schützenden Einheit erfasst wird. Es ist daher vorteilhaft, wenn bei der Bewertung eine Radarortung des Flugkörpers durch das Ziel und/oder eine das Ziel schützende Einheit berücksichtigt wird. Da der Radarbereich des Ziels und ggf. auch der anderen Einheit bekannt ist, kann bewertet werden, ob der Flugkörper in diesen Bereich eintritt bzw. wann er eintritt.

Bei schwierigen Flugbedingungen kann es sein, dass zu wenig Treibstoff vorhanden ist, um frühzeitig unter ein Radar abzutauchen, da ein tieferer Flug mehr Treibstoff verbraucht als ein höherer Flug. Je länger es jedoch möglich ist, unter dem Radar zu bleiben, desto vorteilhafter ist es. In die Bewertung geht daher in einer Ausführungsform der Erfindung eine Entfernung eines Abtauchens in eine Tiefflug-Phase zum Ziel ein. Je früher beispielsweise eine Sea-Skimming-Phase beginnen kann, desto höher ist die Bewertung.

Es kann sein, dass eine Verteidigung eines Ziels nur im Verbund mit mehreren anderen zeitgleich angreifenden Flugkörpern überwunden werden kann. Hierbei ist es ausschlaggebend, dass die mehreren Flugkörper konzertiert angreifen. Daher ist eine zeitliche Koordination der Flugkörper wichtig. Um dies zu erreichen, wird vorgeschlagen, dass der Flugkörper mit anderen Flugkörpern vernetzt ist und in die Bewertung die Einhaltung einer gemeinsamen Ankunftszeit der Flugköper im Ziel eingeht. Die Ankunftszeit muss nicht vorgegeben sein, denn sie kann von den einzelnen Flugkörpern und deren Flugbahnen abhängen. Beispielsweise teilen sich die Flugkörper ihre eigene Ankunftszeit gegenseitig mit. Kommt nun einer der Flugkörper in einer Prädiktion später an als die anderen, erhält die Flugbahn dieser Prädiktion eine schlechtere Bewertung, als wenn sie zügiger wäre. Anders herum ist eine langsamere Flugbahn vorteilhafter, wenn die anderen Flugkörper später kommen.

Ein Angriff einer Gruppe von Flugkörpern kann am effektivsten sein, wenn sie aus verschiedenen Richtungen angreifen. Daher ist es vorteilhaft, wenn der Flugkörper mit anderen Flugkörpern vernetzt ist und in die Bewertung die Einhaltung einer mit den anderen Flugkörpern abgestimmten Ankunftsrichtung im Annäherungsgebiet eingeht. Hierdurch kann ein konzertierter Angriff aus optimierten Richtungen erfolgen.

Je höher die Geschwindigkeit des Flugkörpers bei Erreichen des Annäherungsgebiets oder des Ziels ist, desto besser ist die Bewertung der zugrunde liegenden Flugbahn. Daher sollte in die Bewertung eine Geschwindigkeit des Flugkörpers im Ziel oder im Annäherungsgebiet eingehen. Allerdings kann die Geschwindigkeit durch Treibstoff substituiert werden, da die Geschwindigkeit mit Treibstoff erhöht werden kann. Es ist daher gleichwertig, ob der Flugkörper schnell ankommt, sodass er mit kinetischer Energie schnelle Ausweichmanöver ausführen kann, oder er langsamer ankommt, aber mit Schub des Triebwerks das Bremsen durch die Ausweichmanöver ausgleichen kann. Es kann daher in der Bewertung ein Geschwindigkeitsquantum gleichgesetzt werden mit einer vorbestimmten Treibstoffmenge.

Hinsichtlich der Prädiktion im Planungszyklus kann jede einzelne der mehreren prädizierten Flugbahnen des Flugkörpers in einem Rechenzyklus aus vielen Rechenschritten berechnet werden. Jeder Rechenschritt kann die Integration von einer oder mehreren Differentialgleichungen umfassen. Die Flugbahn kann in viele Prädiktionsabschnitte unterteilt sein, die jeweils mit einem Rechenschritt oder Prädiktionsschritt berechnet werden. Eine Berechnung einer Flugbahn des Flugkörpers kann insofern in mehreren Prädiktionsschritten in einem Prädiktionszyklus erfolgen, wobei eine Flugbahn in einem Prädiktionszyklus berechnet wird.

Der Planungszyklus ist dem Prädiktionszyklus übergeordnet und enthält eine Vielzahl von Prädiktionszyklen. Dem Planungszyklus kann wiederum ein MPG-Zyklus (Model Predictive Guidance) oder ein Missionsplanungszyklus übergeordnet sein, der eine Vielzahl von Planungszyklen enthält. Mit den Daten eines Planungszyklus im MPG-Zyklus wird ein Teilstück der realen Flugbahn abgeflogen, wobei die reale Midcourse-Flugbahn in viele Teilstücke unterteilt ist, zu denen jeweils ein Planungszyklus stattfindet. Oder es wird mit den Daten eines Planungszyklus im Missionsplanungszyklus eine die Mission erlaubende Flugbahn gefunden. Die übergeordnete Variation der Flugbahn des Flugkörpers kann insofern in drei ineinander liegenden Rechenzyklen erfolgen:
- der Berechnung einer Flugbahn des Flugkörpers in mehreren Prädiktionsschritten in einem Prädiktionszyklus,
- die Berechnung mehrerer Flugbahnen in mehreren Durchläufen eines Planungszyklus und
- die Wiederholung der Planungszyklen für mehrere Teilstücke entlang der realen Flugbahn in einem MPG-Zyklus oder für mehrere Variationen von Randbedingungen in einem Missionsplanungszyklus.

Hierbei kann der MPG-Zyklus innerhalb der Midcourse-Phase liegen und insbesondere vom Beginn des Midcourse bis zum Ende des Midcourse reichen.

Es ist die real abgeflogene Flugbahn von der berechneten Flugbahn zu unterscheiden. Die reale Flugbahn ist in mehrere Teilstücke unterteilt, die sich jeweils über eine räumliche Länge erstrecken. Die Teilstücke müssen nicht gleich lang sein, sondern können sich an äußeren Gegebenheiten ausrichten, wie dem Eingang von neuen Daten über Randbedingungen. Zu jedem Teilstück wird ein Planungszyklus ausgeführt, der eine zeitliche Dauer der Berechnung darstellt. Er kann so lang sein wie das Abfliegen eines Teilstücks oder auch kürzer. Innerhalb eines Planungszyklus oder Teilstücks liegen viele Lenkzyklen, also Berechnungen der Lenkkommandos aus der vorgegebenen, konstanten Flugbahn des aktuellen Planungszyklus. In einem Planungszyklus liegen beispielsweise 100 Lenkzyklen. Noch kürzer können Flugreglerzyklen zur Ansteuerung der Lenkflügel sein, sodass ein Lenkzyklus viele Flugreglerzyklen enthält.

Eine berechnete Flugbahn kann in mehrere Abschnitte oder Lenkabschnitte unterteilt sein, beispielsweise drei Abschnitte. Der Prädiktor enthält somit zweckmäßigerweise zu jedem der Abschnitte einen Satz an Steuergrößen, wobei jeder Satz zumindest eine Steuergröße zu jedem Steuerparameter des Prädiktors enthält. Bei drei Abschnitten der Flugbahn hat der Prädiktor beispielsweise neun Dimensionen: 3 x 2 Dimensionen für die Querbeschleunigungen in x- und y-Richtung in den 3 Abschnitten sowie 3 Dimensionen für Vorschub des Triebwerks in den drei Abschnitten. Die Optimierung kann dann mit einem 9-dimensionalen Vektor durchgeführt werden. Die Abschnitte können in eine Vielzahl von Prädiktionsschritten unterteilt sein. Diese können Integrationsabschnitte mit der Länge einer Prädiktionsschrittweite sein.

Damit die benötigte Rechenleistung nicht zu stark ansteigt, kann jeder Abschnitt mit konstanten Steuergrößen abgeflogen werden. Beispielsweise bleiben die beiden Querbeschleunigungen über den gesamten Abschnitt konstant. Alternativ kann das Lenkmanöver des betreffenden Abschnitts an den Beginn dieses Abschnitts gelegt werden, wobei der Flugkörper nach dem Lenkmanöver den Rest des Abschnitts ohne weitere Lenkmanöver fliegt, beispielsweise mit Zero Effort Miss (ZEM).

Die Prädiktionsschritte gehorchen vorteilhafterweise einer oder mehreren der folgenden Bedingungen:
- Innerhalb eines jeden Prädiktionsschritts sollte die Beschleunigung gleich sein. Bei allen Änderungen der Beschleunigung sollte ein Prädiktionsschritt enden und ein neuer beginnen.
- Bei mehreren Lenkabschnitten sollte an jedem Abschnittsende auch der laufende Prädiktionsschritt enden.
- Die Prädiktionsschritte können in Abhängigkeit von der noch verbleibenden Flugzeit oder der Entfernung zum Ziel verkürzt werden, um beispielsweise zum Ende des Flugs hin präziser zu prädizieren.

Ein Planungszyklus kann beendet werden, wenn eine Flugbahn des Flugkörpers gefunden ist, die eine ausreichende Güte aufweist, sodass die Mission des Flugkörpers genügend aussichtsreich erfolgreich durchgeführt werden kann. Das kann der Fall sein, wenn die Bewertung einen vorbestimmten Schwellwert erreicht. Es gibt jedoch auch andere sinnvolle Abbruchkriterien, sodass es vorteilhaft ist, wenn ein Planungszyklus beendet wird, wenn zumindest eines der folgenden Kriterien erreicht wird:
- Zumindest eine der Bewertungen erreicht einen vorbestimmten Schwellwert.
- Die Bewertungen laufen gegen eine Konstante. Dann ist absehbar, dass die weitere Variation der Flugbahnen nicht zu wesentlich besseren Bewertungen führt, sodass sie abgebrochen werden kann.
- Bei der Variation der Steuergrößen fällt der Raumabstand der Steuergrößen im Parameterraum unter einen vorbestimmten Grenzwert. Es ist dann absehbar, dass sich die Steuergrößen bei einer weiteren Variation der Flugbahnen nicht mehr sehr verändern werden, sodass die Prädizierungen abgebrochen werden können.
- Eine Maximalanzahl an Bahnen wurde berechnet. Es kann vorkommen, dass keine gute Flugbahn ermittelbar ist.

Sollte kein ausreichender Schwellwert erreicht sein, so ist es bei den letzten drei der obigen Punkte besser, die Prädizierungen abzubrechen und von einem anderen Ausgangspunkt neu zu beginnen, als die aussichtsarme Variation der Flugbahnen länger fortzusetzen.

Nach einem Abschluss eines Planungszyklus wird ein neuer Planungszyklus entweder unmittelbar oder nach Ablauf eines Wartekriteriums begonnen. Dieser neue Planungszyklus kann als Startwerte für die Prädiktion die Steuergrößen der letzten verwendeten Flugbahn verwenden. Für den Beginn eines Planungszyklus können einer oder mehrere der folgenden Kriterien gelten:
- Der letzte Planungszyklus ist abgeschlossen.
- Ein vorbestimmter Zeitpunkt ist erreicht, beispielsweise wenn eine vorgegebene Wartezeit vergangen ist oder ein vorgegebener absoluter Zeitpunkt erreicht ist.
- Es liegen neue Randbedingungen vor. Wenn sich Randbedingungen ändern, also anders sind, als im vergangenen Planungszyklus angenommen wurde, ist es sinnvoll, die Flugbahn zügig an die neuen Randbedingungen anzupassen. Hierfür kann ein Planungszyklus begonnen werden, der die neuen Randbedingungen berücksichtigt. Gegebenenfalls kann ein noch laufender Planungszyklus abgebrochen werden, damit die neuen Randbedingungen zügig verarbeitet werden.
- Der Ist-Zustand des Flugkörpers weicht vom berechneten Zustand mehr als um ein vorbestimmtes Maß ab. Es kann vorkommen, dass die real gesteuerte Flugbahn von der berechneten um mehr als eine vorgegebene Toleranz abweicht. Dann kann es sinnvoll sein, einen neuen Planungszyklus mit den realen Flugdaten zu beginnen. Ggf. kann ein noch laufender Planungszyklus abgebrochen werden, um die realen Daten zügig zu berücksichtigen.

Die Erfindung ist außerdem gerichtet auf einen Bodenzielflugkörper zum Bekämpfen eines als Seeziel oder als Bodenziel ausgeführten Ziels mit einem in seinem Schub steuerbaren Triebwerk und einer Steuereinheit. Die auf den Bodenzielflugkörper gerichtete Aufgabe wird durch einen Bodenzielflugkörper gemäß den Merkmalen von Patentanspruch 11 gelöst. Die Steuereinheit ist dazu vorbereitet, einen Flug zu einem Ziel innerhalb einer Midcourse-Phase des Flugs zu lenken und in einem Planungszyklus
a) eine Prädiktion einer möglichen Flugbahn des Flugkörpers mit einem Prädiktor zu erstellen und die Flugbahn zu bewerten,
b) weitere Prädiktionen möglicher Flugbahnen des Flugkörpers zum Ziel zu berechnen durch mehrfache Variationen von Steuergrößen des Flugkörpers, wobei die Flugbahnen jeweils bewertet werden, und
c) anhand der Bewertungen eine der Flugbahnen des Flugkörpers auszuwählen, und
sowie eine Lenkung zum Fliegen entlang eines ersten Teilstücks dieser Flugbahn zu steuern und den Planungszyklus mehrfach für nachfolgende Teilstücke zu wiederholen. Zudem ist die Steuereinheit zur Durchführung einer Missionsplanung in einem Missionsplanungszyklus vorbereitet.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Flugkörper im Anflug auf ein Ziel, das ein Radar aufweist,
- FIG 2: die Flugbahn des Flugkörpers um mehrere No Fly Zones herum,
- FIG 3: ein Flussdiagram eines Verfahrens zur Bestimmung einer Flugbahn des Flugkörpers zum Ziel,
- FIG 4: die prädizierte Flugbahn des Flugkörpers zum Ziel,
- FIG 5: ein Diagramm mit Querbeschleunigungen des Flugkörpers und
- FIG 6: ein Flussdiagram eines Verfahrens zur Missionsplanung.

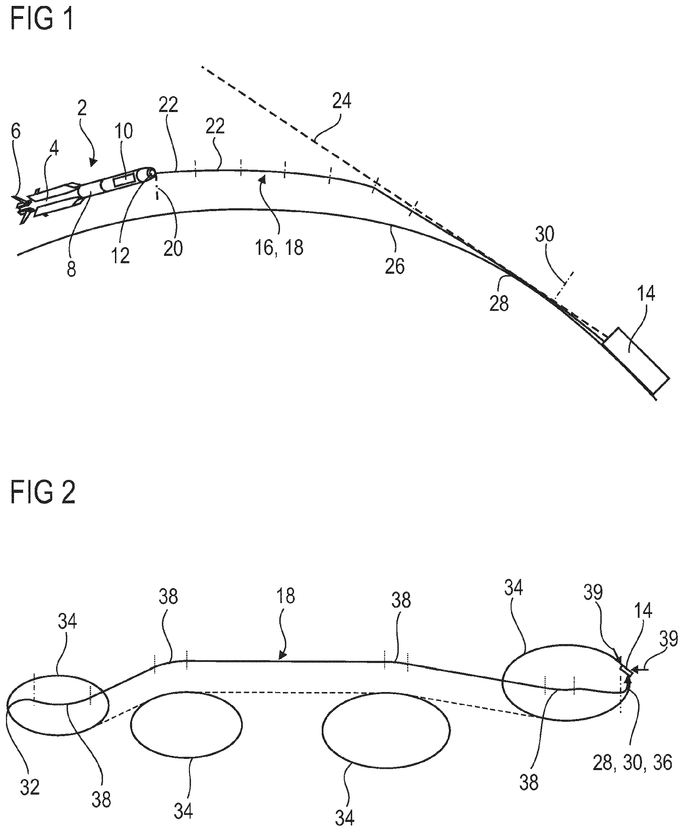

FIG 1 zeigt einen Flugkörper 2 in Form eines Lenkflugkörpers mit einem im Schub steuerbaren Ramjet-Triebwerk 4, Lenkflügeln 6, einem Wirkkörper 8, einer Steuereinheit 10 und einem Infrarot- oder Radar-Suchkopf 12. Der Radar-Suchkopf 12 rein passiv suchen oder zusätzlich ein aktives Radar aufweisen. Der Flugkörper 2 ist ein Seezielflugkörper während eines Midcourse-Flugs auf dem Weg zu einem Ziel 14, das er bekämpfen soll. Das Ziel 14 ist ein Wasser- oder Landfahrzeug. Um das Ziel 14 zu erreichen, ist eine angenommene Bewegungsbahn des Ziels 14 im Flugkörper 2 hinterlegt, die beispielsweise von einer Bodenstation, wie einem Waffensystem, an den Flugkörper 2 übermittelt wurde. Die Flugbahn 16 des Flugkörpers 2 ist an die angenommene Bewegungsbahn des Ziels 14 angepasst, sodass sich Flugkörper 2 und Ziel 14 in einem Predicted Intercept Point (PIP) treffen. Die Darstellung der Flugbahn 16 ist nicht maßstabsgetreu.

Die in FIG 1 gezeigte Flugbahn 16 ist die real geflogene Flugbahn 16. Sie sollte unterschieden werden von den berechneten, theoretischen Flugbahnen 18, die Ergebnis der Planungszyklen sind. Jeder Planungszyklus gibt als Ergebnis eine Flugbahn 18 zum Ziel 14 aus, die am aktuellen Flugpunkt 20 beginnt und über die gesamte Strecke bis zum Ziel 14 berechnet wird, jedoch nur für ein vorderes Teilstück 22 abgeflogen wird. Während dieses Abfliegens wird die theoretische Flugbahn 18 neu berechnet und ein nächstes Teilstück 22 wird dann anhand der Steuergrößen der dann neuen berechneten Flugbahn 18 abgeflogen. In FIG 1 sind mehrere Teilstücke 22 durch strichpunktierte Linien voneinander getrennt dargestellt.

Die real geflogene Flugbahn 16 des Flugkörpers 2 orientiert sich insofern an der berechneten Flugbahn 18, da sie mit den aus der Berechnung der Flugbahn 18 gewonnenen Steuergrößen der Lenkung des Flugkörpers 2 geflogen wird. Beispielsweise sind die Steuergrößen Querbeschleunigungen G. Es werden dann die Lenkflügel 6 des Flugkörpers 2 so angesteuert, dass die gewünschten Querbeschleunigungen G, also Steuergrößen, erreicht werden. Die reale Flugbahn 16 muss nicht perfekt identisch mit der berechneten Flugbahn 18 sein. Die Berechnungen der Flugbahn 18 erfolgt zyklisch von Teilstück 22 zu Teilstück 22 in mehreren Durchläufen eines MPG-Zyklus (Model Predictive Guidance).

Das Ziel 14 ist mit einem Radar ausgestattet, das einen Radarstrahl 24 zum Erfassen von Flugkörpern aussendet. Aufgrund der Erdkrümmung 26 steigt der Radarstrahl 24 mit zunehmender Entfernung vom Ziel 14 von der Erdoberfläche auf. Die Flugbahn 18 ist an den Radarstrahl 24 angepasst und taucht vor dem Erreichen des Radarstrahls 24 nach unten ab bis zu einem Sea-Skimming 28 unmittelbar über der Wasseroberfläche. In einem vorbekannten Abstand vom Ziel 14 erreicht der Flugkörper 2 ein Bekämpfungsgebiet 30, das bis zum Ziel 14 reicht. Dort wird der Flugkörper 2 mit Abfangflugkörpern, die vom Ziel 14 aus starten, bekämpft. Um diesen Abfangflugkörpern ausweichen zu können, muss der Flugkörper 2 mit einer ausreichend hohen Geschwindigkeit fliegen und noch genügend Treibstoff zur Verfügung haben, um die Geschwindigkeit ausreichend hoch zu halten, da der Energieverlust bei scharfen Ausweichmanövern sehr hoch ist. Um während des Flugs Treibstoff zu sparen, fliegt der Flugkörper 2 in einer Höhe von über 15 km, insbesondere über 18 km Höhe. Erst Randbedingungen, wie der Radarstrahl 24, lässt es vorteilhafter erscheinen, niedriger zu fliegen und damit eine starke Luftreibung und hierdurch einen höheren Treibstoffverbrauch in Kauf zu nehmen.

FIG 2 zeigt die Flugbahn 18 schräg von oben in einer maßstabsgetreueren Darstellung als FIG 1. Der Flugkörper 2 beginnt seinen Flug in einem Startpunkt 32 aus einem Waffensystem, das auf einem Schiff oder einem Fahrzeug an Land platziert ist. Die Flugbahn 18 ist mehr als 1.000 km lang und reicht bis zum Ziel 14. Sie umläuft vier No Fly Zones 34, die durch das Ziel 14 verteidigende Waffensysteme gebildet werden. Eine Projektion der Flugbahn 18 auf die Erdoberfläche ist in FIG 2 gestrichelt dargestellt.

Nach dem Start am Startpunkt 32 steigt der Flugkörper 2 in einer Startphase auf bis zu einer angestrebten Flughöhe, in der er dann zumindest im Wesentlichen bleibt bis zu einem Abstieg vor dem Ziel 14. Die nach der Startphase liegende Midcourse-Phase ist in FIG 1 zwischen strichpunktierten Linien angedeutet. Sie beginnt nach der Startphase und endet mit Erreichen eines Annäherungsgebiets 36 in der Nähe des Ziels 14. Innerhalb des Annäherungsgebiets 36, das bis zum Ziel 14 reicht, liegt das Bekämpfungsgebiet 30, das identisch mit dem Annäherungsgebiet 36 sein kann. Dort fliegt der Flugkörper 2 im Sea-Skimming 28 bis zum Ziel 14. Die No Fly Zones 34 umfliegt der Flugkörper 2 von Wegpunkt zu Wegpunkt, die in FIG 2 anhand von punktierten Linien angedeutet sind. Die Wegpunkte können - ebenso wie der Abstieg zum Unterfliegen des Radars und das Sea-Skimming 28 - als Randbedingungen des Flugs festgelegt sein. Der Flugkörper 2 umfliegt die No Fly Zones 34 auf Kreisbogenabschnitten 38 bei jeweils zumindest im Wesentlichen konstanter Flughöhe. Hierdurch wird die Querbeschleunigung G während des Umfliegens konstant gehalten mit dem Ergebnis eines minimalen Treibstoffverbrauchs. Zwischen den Kreisbogenabschnitten 38 fliegt der Flugkörper 2 geradlinig bis zum nächsten Wegpunkt bzw. Kreisbogenabschnitt 38 oder bis zum Bekämpfungsgebiet 30. Vor dem Bekämpfungsgebiet 30 liegt der Abstieg von der Flughöhe zur Erdoberfläche, um unter dem Radarstrahl 24 zu bleiben. In FIG 2 ist zudem dargestellt, dass das Ziel 14 von weiteren Flugkörpern 39 aus verschiedenen Richtungen angegriffen wird, die durch zwei kleine Pfeile symbolisiert sind. Die Flugkörper 2, 39 erreichen das Ziel 14 zeitgleich.

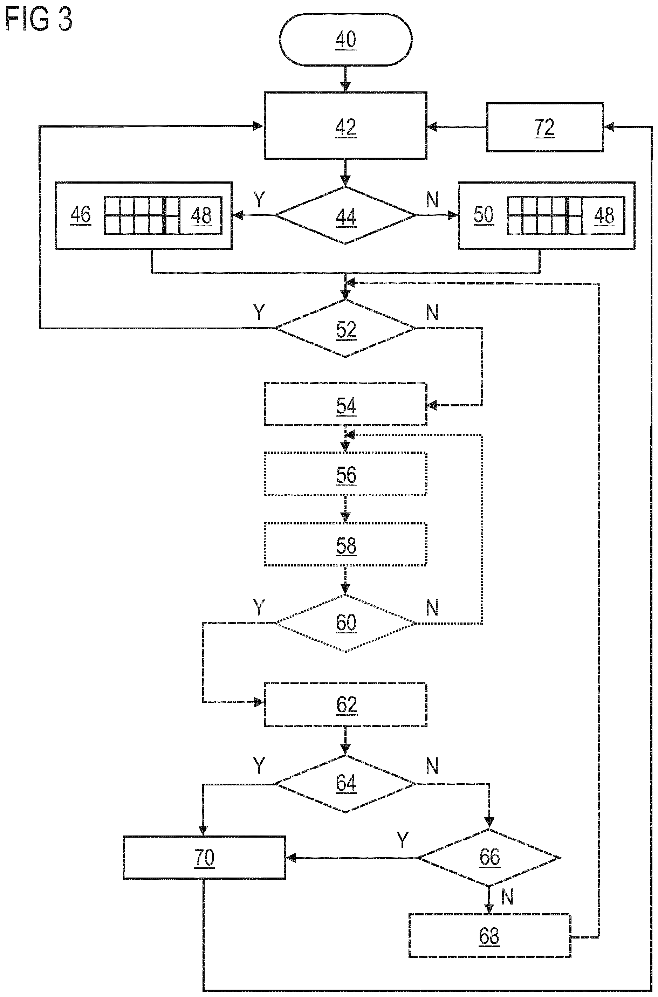

FIG 3 zeigt ein Flussdiagram eines Verfahrens zur Bestimmung einer Flugbahn 18 des Flugkörpers 2 zum Ziel 14. Die einzelnen Schritte werden von der Steuereinheit 10 des Flugkörpers 2 ausgeführt und sind im Folgenden beschrieben.

| | |
|---|---|
| 40 | Beginn des Verfahrens, Beginn des MPG-Zyklus (Model Predictive Guidance). Dieser Zyklus ist in FIG 3 in durchgezogenen Feldern und Pfeilen dargestellt. Er umschließt den Planungszyklus (gestrichelte Felder und Pfeile), der wiederum den Prädiktionszyklus (punktierte Felder und Pfeile) umschließt, und durchläuft für jedes Teilstück 22 (siehe FIG 1) der Flugbahn 18 einen Durchlauf. |
| 42 | Beginn des ersten Durchlaufs des MPG-Zyklus. Er umschließt nach initialisierenden Schritten 42 - 50 den Planungszyklus. Die initialisierenden Schritte 42 - 50 sind: |
| | a) Einlesen der Randbedingungen, wie die Position, Geschwindigkeit mit Richtung des Ziels 14, Radar des Ziels 14, Abstiegszone, Wegpunkte bzw. No Fly Zones 34, Wetterdaten oder anderen Randbedingungen aus Daten einer Bodenstation, und |
| | b) Einlesen des eigenen Flugzustands aus der bordeigenen Navigationsrechnung und/oder Daten einer Bodenstation. Hierzu gehört das Einlesen der eigenen Position im Raum, denn diese bildet den aktuellen Flugpunkt 20, von dem aus eine Vielzahl von Flugbahnen 18 berechnet werden, die alle vom gleichen Flugpunkt 20 starten. Alternativ kann der aktuelle Flugpunkt 20 an das Ende des aktuellen Teilstücks 22 der Flugbahn 18 gelegt werden oder an einen Ort der Flugbahn 18, der zwischen Beginn und Ende des Teilstücks 22 liegt. |
| 44 | Abfrage: Erster MPG-Zyklus? |
| 46 | Ja: Initialisierung der Startwerte der Steuerparameter (erste Steuergrößen) zur aktiven Beeinflussung der eigenen Flugbahn 18. |
| 48 | Prädiktor mit mehreren Steuergrößen der Querbeschleunigung G, dem Bewegungszustand des Ziels 14, dem eigenen Flugzustand und diversen Randbedingungen. Die Steuergrößen, Zustände und Randbedingungen sind im Prädiktor 48 mit einzelnen Kästchen in Anzahl und Art nur symbolisch dargestellt. |
| 50 | Nein: Übernahme der Steuergrößen aus dem letzten Durchlauf des MPG-Zyklus als Startwerte der Steuerparameter zur aktiven Beeinflussung der eigenen Flugbahn 18. In beiden Schritten 46, 50 enthält der Prädiktor 48 eine mathematische Beschreibung einer Flugbahn 18 des Flugkörpers 2. In Schritt 46 eine erste, unoptimierte Flugbahn, in Schritt 50 die Flugbahn 18 des letzten Planungszyklus. |
| 52 | Abfrage: Liegen neue Randbedingungen vor? Falls ja, werden diese im Schritt 42 eingelesen. Falls nein, beginnt der Planungszyklus. |
| 54 | Initialisierung der Prädiktion von Ziel 14 und Flugkörper 2, T_{go} = 0, die Restflugzeit wird auf Null gesetzt. |
| 56 | Berechnung der Prädiktionsschrittweite ΔT. Sie ist unten zu den FIGs 4 und 5 ausführlich beschrieben. |
| 58 | Prädiktionsschritt T_{go} := T_{go} + ΔT. In jedem Prädiktionsschritt 74 wird die Flugbahn 18 des Flugkörpers 2 für diesen Schritt berechnet. Die Flugbahn 18 des Flugkörpers 2 startet vom aktuellen Flugpunkt 20. Sie wird anhand der Steuergrößen berechnet, wobei Schub und Widerstand einbezogen werden. |
| 60 | Abfrage: Hat der Flugkörper 2 das Ziel 14 erreicht? Ist das nicht der Fall, so springt das Verfahren zurück zu Schritt 56, in dem die Prädiktionsschrittweite ΔT des nächsten Schritts berechnet wird und in Schritt 58 die Flugbahn 18 im nächsten Prädiktionsschritt berechnet wird. |
| 62 | Hat die Prädiktion der Flugbahn 18 das Ziel 14 erreicht, so ist die Berechnung der Flugbahn 18 abgeschlossen. Nun wird in Schritt 62 ihre Güte anhand der Güte- oder Kostenfunktion bestimmt. |
| 64 | Abfrage: Ist das temporäre Güteoptimum erreicht? |
| 66 | Nein. Abfrage: Ist ein Abbruchkriterium zum Abbrechen des Planungszyklus erreicht? |
| 68 | Liegt kein Abbruchkriterium vor, werden die Steuergrößen variiert und das Verfahren springt zurück zu Schritt 52. Ohne neue Randbedingungen beginnt ein neuer Durchlauf des Planungszyklus und es wird eine neue Flugbahn 18, die vom gleichen aktuellen Flugpunkt 20 beginnt, berechnet und bewertet. Sollten sich zwischenzeitlich neue Randbedingungen eingestellt haben, so werden sie über die Schritte 52 und 42 aufgenommen und der Planungszyklus beginnt von vorne. Die bisherigen Flugbahnen 18 des bisherigen Planungszyklus werden verworfen, da deren Güten sich noch auf die alten Randbedingungen beziehen und nicht mehr korrekt sind. |
| 70 | Liegt ein Abbruchkriterium vor, so werden die Güteergebnisse der bisher errechneten Flugbahnen 18 miteinander verglichen und die Flugbahn 18 mit dem besten Güteergebnis wird als temporäres Güteoptimum angesehen. |
| 70 | Auch wenn die Abfrage 64 positiv ist, also das temporäre Güteoptimum erreicht wurde, so ist der Planungszyklus beendet. Die Flugbahn 18 mit dem Güteoptimum wird als Grundlage zur Flugsteuerung herangezogen. Das heißt, dass die zu Berechnung dieser Flugbahn 18 verwendeten Steuergrößen nun zur Steuerung bzw. Lenkung des realen Flugs verwendet werden. Der Flugkörper 2 wird entlang dieses Teilstücks 22 der Flugbahn 18 gesteuert, wobei während dieses Flugs der nächste Planungszyklus für das nachfolgende Teilstück 22 begonnen wird. Hierfür springt das Verfahren über Schritt 72 zurück zu Schritt 42. |
| 72 | Eventuelles Warten einer vorgegebenen Zeit, bis der neue Planungszyklus beginnt. |
| 42 | Es beginnt der nächste Durchlauf des MPG-Zyklus. Es werden die Randbedingungen und der Flugzustand des Flugkörpers 2 aktualisiert und über die Abfrage 44 in Schritt 50 der Prädiktor 48 aktualisiert, wobei dieser die optimierten Steuergrößen aus dem letzten Planungszyklus erhält. |

In Schritt 62 wird die Güte der Flugbahn 18 bestimmt, die Flugbahn 18 wird bewertet. Dies kann unter Verwendung von einem oder mehreren Gütekriterien erfolgen. Eines der Gütekriterien ist, wie viel Treibstoff für das Triebwerk 4 im Annäherungsgebiet 36 rechnerisch noch übrig ist. Der Punkt für die Berechnung kann am Beginn des Annäherungsgebiets 36 liegen, im Ziel 14 oder dazwischen. Je mehr Treibstoff vorhanden ist, desto höher ist die Bewertung, da viel Treibstoff viele und scharfe Ausweichmanöver erlaubt bis hin zu einem länger anhaltenden Wedeln im Bekämpfungsgebiet 30. Ebenso geht die Geschwindigkeit des Flugkörpers 2 im Annäherungsgebiet 36, beispielsweise im Ziel 14, in die Bewertung ein. Hierbei kann ein Geschwindigkeitsquantum gleichgesetzt werden mit einer vorbestimmten Treibstoffmenge.

Ein weiteres Gütekriterium ist das Risiko eines Erlöschens des Triebwerks 4. Das kann ein Erlöschen durch Treibstoffmangel sein, ein Erlöschen durch zu langsamen Flug oder zu dünne Luft in einer zu großen Flughöhe des Flugkörpers 2. Auch wird ein Risiko einer Radarortung des Flugkörpers 2 durch das Ziel 14 und/oder eine das Ziel 14 schützende Einheit bewertet. Hierzu gehört auch die Bewertung einer Entfernung, ab der der Flugkörper aus seiner Flughöhe absteigt und die Entfernung, ab der eine Tiefflug-Phase zum Ziel 14 beginnt, wie das Sea-Skimming 28. Bei einem konzertierten Angriff des Ziels 14 durch mehrere Flugkörper 2, 39 wird zudem die Einhaltung einer gemeinsamen Ankunftszeit der Flugköper 2, 39 im Ziel 14 bewertet, sowie die Einhaltung einer mit den anderen Flugkörpern 39 abgestimmten Ankunftsrichtung an das Ziel 14. Insofern kann eine Begegnungsgeometrie von Flugkörper 2 und Ziel 14 bewertet werden. Ein weiteres Gütekriterium ist die Flugzeit vom aktuellen Flugpunkt 20 zum Ziel 14. Je kleiner die Flugzeit ist, desto höher ist die Bewertung oder Güte.

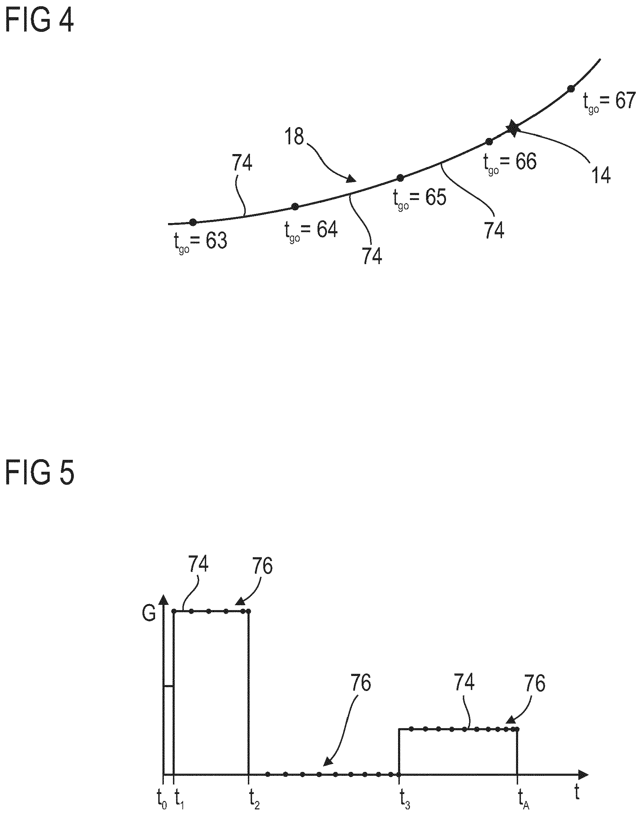

FIG 4 zeigt einen Endteil der berechneten Flugbahn 18. Der Prädiktionszyklus hat bei T_{go} = 0 begonnen, wobei bei jedem Prädiktionsschritt 74 T_{go} um 1 bzw. ΔT hochgesetzt wird. Auf diese Weise nähert sich der Flugkörper 2 ans Ziel 14 an bis er während des 66sten Prädiktionsschritts 74 das Ziel 14 erreicht. Zu Beginn des 67sten Prädiktionsschritts 74 hat sich der rechnerische Abstand wieder vergrößert, die Annäherungsgeschwindigkeit wird negativ und die Schleife des Prädiktionszyklus kann im Schritt 60 beendet werden. Aus den Prädiktionsschritten 74 kann die Restflugzeit vom aktuellen Flugpunkt 20 bis zum Ziel 14 ermittelt werden, die im vorliegenden Beispiel etwas mehr als 66 Prädiktionsschritte 74, also Zeitschritte, beträgt.

FIG 5 zeigt ein Diagramm der Querbeschleunigung G des Flugkörpers 2 über die Zeit. Jede berechnete Flugbahn 18 wird in mehrere Abschnitte 76 eingeteilt, beispielsweise die Kreisbogenabschnitte 38, die geraden Abschnitte und das Absinken bis zum Annäherungsgebiet 36. In FIG 5 sind der Übersichtlichkeit halber nur drei Abschnitte 76 dargestellt. t₀ gibt den aktuellen Zeitpunkt an, während dem die Berechnung stattfindet. Für den Fall, dass der aktuelle Flugpunkt 20 eine kleine Zeitdauer in der Zukunft liegt, gibt t₁ den Zeitpunkt an, an dem der Flugkörper 2 den aktuellen Flugpunkt 20 erreicht. Von diesem Zeit- bzw. Ortspunkt werden alle Flugbahnen 18 berechnet. Es kann der Beginn eines Teilstücks 22 der Flugbahn 18 sein. Die Zeitpunkte t₂, t₃ und t_{A} markieren jeweils das Ende der Abschnitte 76. Zum Zeitpunkt t_{A} ist das Ziel 14 - vermutlich - erreicht, wobei sich das erst im Laufe der Prädiktion, also der Berechnung der Flugbahn 18, herausstellt.

Während eines jeden der Abschnitte 76 ist die Querbeschleunigung G des Flugkörpers 2 in beide Raumrichtungen konstant. In FIG 5 ist nur eine der beiden Querbeschleunigungen G gezeigt, beispielsweise in y-Richtung, die entlang der drei Abschnitte 76 drei freie, also wählbare, Steuergrößen ergibt. Der Flugkörper 2 fliegt also eine Flugbahn 18 aus drei Abschnitten 76, und in jedem der Abschnitte 76 fliegt er einen Kreisbogenabschnitt 38 oder eine Gerade.

Die Länge der Prädiktionsschritte 74 wird in Schritt 56 festgelegt. Sie kann für jeden Prädiktionsschritt 74 individuell festgelegt werden. Hierbei kann eines oder mehrere der folgenden Kriterien herangezogen werden:
- Alle Steuergrößen sollen während eines Prädiktionsschritts 74 gleich bleiben, sie sollen sich also nur von einem zum nächsten Prädiktionsschritt 74 verändern. Auf den Zeitpunkt einer Größenveränderung wird ein Prädiktionsschritt 74 gelegt.
- An den Zeitpunkt des Veränderns eines Triebwerksschubs wird ein Prädiktionsschritt 74 gelegt.
- Ändert sich ein Lenkmanöver des Flugkörpers 2, so wird in den Zeitpunkt der Änderung ein Prädiktionsschritt 74 gelegt.
- Die Schrittweite ΔT nimmt mit einem Abstand des Flugkörpers 2 zum Ziel 14 ab. Beispielsweise wird sie proportional zum Abstand des Flugkörpers 2 zum Ziel 14 gewählt.

Reicht beispielsweise einer der Prädiktionsschritte 74 über einen Abschnitt 76 hinaus, so würde sich während des Prädiktionsschritts 74 die Steuergröße ändern, vermutlich beide Steuergrößen. Dies würde die Integration des Prädiktionsschritts 74 erheblich stören. Daher wird der letzte Prädiktionsschritt 74 am Ende eines jeden Abschnitts 76 abgebrochen, sodass der nächstfolgende Prädiktionsschritt 74 mit dem neuen Abschnitt 76 beginnt. Hier ist dann der Prädiktionsschritt 74 kürzer als die Länge ΔT zuvor.

Alternativ zu den über einen Abschnitt 76 konstanten Steuergrößen können die Steuergrößen Funktionen über die Zeit bilden. Die Steuergrößen sind nicht konstant, sondern können von Prädiktionsschritt 74 zu Prädiktionsschritt 74 schrittweise verändert werden oder sogar kontinuierlich verändert werden, sodass die Prädiktionsschritte 74 jeweils veränderliche Querbeschleunigungen G aufweisen. Die Funktionen können von Abschnitt 76 zu Abschnitt 76 variiert werden.

In Schritt 64 (FIG 3) findet die Abfrage statt, ob das temporäre Güteoptimum erreicht ist. Mit Erreichen des Güteoptimums kann der aktuelle Planungszyklus beendet werden. Das Güteoptimum muss kein absolutes Optimum sein, ein temporäres Optimum ist ausreichend, also die beste zur Verfügung stehende Flugbahn 18. Das Güteoptimum kann als erreicht angesehen werden, wenn zumindest eine der Bewertungen einen vorbestimmten Güteschwellwert erreicht. Dies kann das Hauptkriterium sein, dem andere Kriterien untergeordnet sind. Es kann auch als erreicht angesehen werden, wenn mit der betreffenden Flugbahn 18 ein Missionserfolg ausreichend wahrscheinlich ist. Das Güteoptimum ist jedoch nicht gleichzusetzen mit einem voraussichtlichen Missionserfolg. Es kann sein, dass kein Güteoptimum erreicht wird, mit dem ein Missionserfolg ausreichend wahrscheinlich ist. Dann sollte es ein Abbruchkriterium geben, damit der Planungszyklus nicht sinnlos weiterläuft. Folgende Abbruchkriterien können jeweils einzeln sinnvoll sein.

Wenn die Bewertungen beispielsweise gegen eine Konstante laufen, ist deutlich, dass eine weitere Variation der Flugbahnen vermutlich nicht zu einer deutlichen Vergrößerung der Güte führen wird. Die Prädiktionen können abgebrochen und der Planungszyklus kann beendet werden. Auch wenn bei der Variation der Steuergrößen der Raumabstand der Steuergrößen im Parameterraum unter einen vorbestimmten Grenzwert fällt, haben die Prädiktionen ihre Grenzen erreicht und können abgebrochen werden. Ist schließlich keines der obigen Kriterien erreicht, so kann als letztes Kriterium eine Maximalanzahl an berechneten Flugbahnen 18 den Planungszyklus beenden. Dann wird die beste bislang gefundene Flugbahn 18 zur Lenkung verwendet.

In Schritt 68 werden die Steuergrößen variiert. Das geschieht unter Nutzung eines Suchverfahrens zur numerischen Parameteroptimierung, z.B. mittels Gauß-Seidel, Newton o.ä. Besonders vorteilhaft ist ein Simplexverfahren, wie nach Nelder-Mead. Bei langen Flugstrecken ist die Flugroute in x- und y-Richtung im Wesentlichen vorgegeben und kaum mit Flugbahnveränderungen verbesserbar. Ausschlaggebend für den Treibstoffverbrauch ist die Flughöhe, die mit dem Suchverfahren variiert wird, wobei natürlich auch die Variation der Flugbahn in lateraler Richtung im Suchverfahren berücksichtigt wird. Es wird jedoch die Variation der Flughöhe als Hauptvariationsparameter des Suchverfahrens verwendet. Hierbei kann die Flughöhe als Funktion über zumindest einen Teil der Flugstrecke zum Ziel 14 als Steuergröße variiert werden.

Normalerweise wird ein neuer Planungszyklus begonnen, wenn der letzte Planungszyklus abgeschlossen ist. Es kann jedoch vorkommen, dass andere Kriterien zum Beginn eines neuen Planungszyklus vorteilhafter sind. Ist beispielsweise sehr schnell eine optimale Flugbahn 18 gefunden, kann mit dem Beginn eines Planungszyklus eine Weile gewartet werden (Schritt 72), z.B. bis ein vorbestimmter Zeitpunkt erreicht ist oder eine Wartezeit vergangen ist. Wenn neue Randbedingungen oder Zieldaten vorliegen, ist es ebenfalls vorteilhaft, einen neuen Planungszyklus zu beginnen. Entweder wird der noch laufende Planungszyklus abgebrochen und dessen Ergebnisse verworfen, wie zu Schritt 42 beschrieben ist, oder die Wartezeit in Schritt 72 wird vorzeitig beendet.

Der beschriebene Planungszyklus kann abweichend von dem bisherigen Ausführungsbeispiel bereits ohne einen Flug des Flugkörpers 2 ausgeführt werden, beispielsweise zur Missionsplanung vor einem Flug des Flugkörpers 2. So kann vor dem Flug ermittelt werden, ob die Mission am Ziel 14 mit dem vorhandenen Treibstoff möglich ist. Wenn sie nicht möglich ist, kann der Planungszyklus unter veränderten Randbedingungen erneut ausgeführt werden, ggf. auch mehrfach, wobei vor jedem Durchlauf eine Randbedingung verändert wird oder mehrere Randbedingungen verändert werden.

Die Randbedingungen sind hierbei von der Flugkörperlenkung bzw. den Steuergrößen unabhängig. Sie können auf dem Weg vom Start zum Ziel anzufliegende Wegpunkte sein, eine vorgegebene Flughöhe auf dem Weg vom Start zum Ziel, ein vorgegebener Absinkpunkt, ein vorgegebener Tiefflugbeginn, eine vorgegebene Anflugrichtung, Anflugzeit und/oder Annäherungsgeschwindigkeit des Flugkörpers und/oder ein vorhandener Resttreibstoff bei der Annäherung, z.B. im Ziel 14.

Es kann vorkommen, dass sich während des Flugs eine oder mehrere Randbedingungen ändern, z.B. durch das Entdecken einer neuen No Fly Zone 34. Dann ist das Ausführen einer Missionsplanung während des Flugs zum Ziel 14 mit der oder den geänderten Randbedingungen sinnvoll, wobei ermittelt wird, ob die Mission am Ziel 14 mit dem vorhandenen Treibstoff möglich ist. Sollte sie nicht möglich sein, so kann die Planungsphase unter veränderten Randbedingungen erneut ausgeführt werden, so lange, bis Randbedingungen gefunden sind, mit der der Missionserfolg eine ausreichende Wahrscheinlichkeit bzw. Güte erreicht. Oder es werden diejenigen Randbedingungen gewählt, die die beste Güte für einen Missionserfolg erzeugen. Anstelle des MPG-Zyklus wird insofern ein Missionsplanungszyklus ausgeführt, bei dessen mehreren Durchläufen nicht ein Teilstück der Flugbahn nach dem anderen abgeflogen wird, wie beim MPG-Zyklus, sondern eine oder mehrere Randbedingungen jeweils verändert werden. Hierbei wird bei jedem Durchlauf des Missionsplanungszyklus eine Missionsgüte bewertet. Der Missionsplanungszyklus kann beendet werden, wenn eine ausreichende Missionsgüte gefunden wurde oder aufgrund eines Kommandos der MPG-Zyklus wieder gestartet werden muss, um den laufenden Flug weiterzuführen. Es können dann diejenigen Randbedingungen gewählt werden, die die beste Missionsgüte bewirken. Der MPG-Zyklus wird dann unter diesen Randbedingungen ausgeführt.

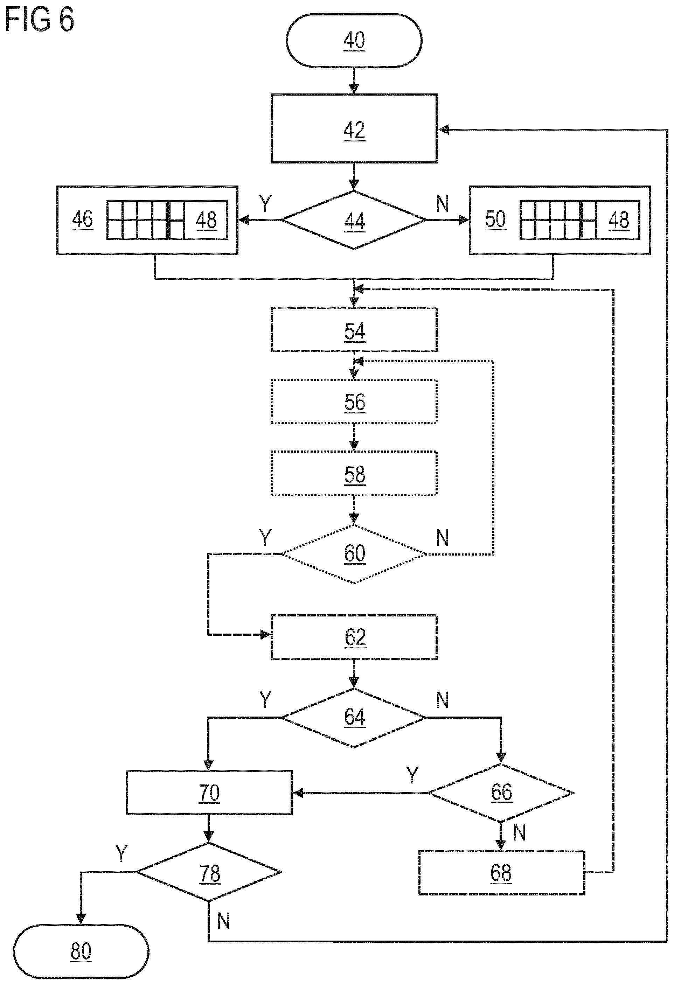

Ein entsprechendes Verfahren wird im Folgenden anhand des Flussdiagrams aus FIG 6 erläutert. Hierfür wird auf die Erläuterungen aus FIG 3 verwiesen, die auch für FIG 6 gültig sind bis auf die folgenden Änderungen. Gleiche oder analoge Verfahrensschritte sind mit den gleichen Bezugsziffern versehen.

| | |
|---|---|
| 40 | Beginn des Missionsplanungszyklus. Dieser Zyklus ist in FIG 6 in durchgezogenen Feldern und Pfeilen dargestellt. Er umschließt den Planungszyklus (gestrichelte Felder und Pfeile), der wiederum den Prädiktionszyklus (punktierte Felder und Pfeile) umschließt. Der Missionsplanungszyklus durchläuft für jede Änderung zumindest einer Randbedingung einen Durchlauf. |
| 42 | Beginn des ersten Durchlaufs des Missionsplanungszyklus. |
| | a) Einlesen der Randbedingungen, |
| | b) Einlesen des eigenen Flugzustands. |
| 44 | Abfrage: Erster Missionsplanungszyklus? |
| 46 | Ja: Bei Offline-Missionsplanung: Initialisierung der Startwerte der Steuerparameter (erste Steuergrößen) zur aktiven Beeinflussung der |
| | prädizierten Flugbahn 18. Bei Online-Missionsplanung: Übernahme der Steuergrößen aus dem letzten MPG-Zyklus. |
| 48 | Prädiktor mit mehreren Steuergrößen der Querbeschleunigung G, dem Bewegungszustand des Ziels 14, dem eigenen Flugzustand und diversen Randbedingungen. |
| 50 | Nein: Übernahme der Steuergrößen aus dem letzten Durchlauf des Missionsplanungszyklus als Startwerte der Steuerparameter zur aktiven Beeinflussung der eigenen Flugbahn 18. |
| 54 | Initialisierung der Prädiktion, T_{go} = 0, die Restflugzeit wird auf Null gesetzt. |
| 56 | Berechnung der Prädiktionsschrittweite ΔT. |
| 58 | Prädiktionsschritt T_{go} := T_{go} + ΔT und Berechnung der Flugbahn 18. |
| 60 | Abfrage: Hat der Flugkörper 2 das Ziel 14 erreicht? Nein: Das Verfahren springt zurück zu Schritt 56, in dem die Prädiktionsschrittweite ΔT des nächsten Schritts berechnet wird und in Schritt 58 die Flugbahn 18 im nächsten Prädiktionsschritt 74 berechnet wird. |
| 62 | Ja: Ende der Berechnung der Flugbahn 18 und Bestimmung ihrer Güte anhand der Güte- oder Kostenfunktion. |
| 64 | Abfrage: Ist das temporäre Güteoptimum erreicht? |
| 66 | Nein, temporäres Güteoptimum ist nicht erreicht. Abfrage: Ist ein Abbruchkriterium erreicht? |
| 68 | Kein Abbruchkriterium erreicht. Es werden die Steuergrößen variiert und der Planungszyklus wird erneut durchlaufen. |
| 70 | Ja, es ist ein Abbruchkriterium erreicht. Beenden des Planungszyklus. Die Flugbahn 18 mit dem besten Güteergebnis wird als temporäres Güteoptimum verwendet. |
| 70 | Ja, es ist ein Güteoptimum in Schritt 64 erreicht. Beenden des Planungszyklus. Die Flugbahn 18 mit dem temporären Güteoptimum wird verwendet. |
| 78 | Abfrage: Kann die Mission mit ausreichenden Erfolgsaussichten durchgeführt werden? Falls nicht, springt das Verfahren zurück zu Schritt 42 und zumindest eine Randbedingung wird verändert und der Prädiktor 48 wird aktualisiert. Auch hier kann der Planungszyklus mit den optimierten Steuergrößen aus dem letzten Planungszyklus beginnen. Anschließend beginnt der nächste Durchlauf des Missionsplanungszyklus. |
| 80 | Ja, die die Mission kann mit ausreichenden Erfolgsaussichten durchgeführt werden. Die Randbedingungen werden gewählt. Das Verfahren ist beendet, die Mission kann ausgeführt werden. Bei einer Durchführung während des Flugs des Flugkörpers 2 kann nun der MPG-Zyklus mit den gewählten |
| | Randbedingungen starten, um die nächste Flugbahn 18 zu berechnen. Das erste Teilstück 22 kann hierbei mit den Steuergrößen aus dem Missionsplanungszyklus geflogen werden. |

### Bezugszeichenliste

- 2: Flugkörper
- 4: Triebwerk
- 6: Lenkflügel
- 8: Wirkkörper
- 10: Steuereinheit
- 12: Suchkopf
- 14: Ziel
- 16: Flugbahn
- 18: Flugbahn
- 20: Flugpunkt
- 22: Teilstück
- 24: Radarstrahl
- 26: Erdkrümmung
- 28: Sea-Skimming
- 30: Bekämpfungsgebiet
- 32: Startpunkt
- 34: No Fly Zone
- 36: Annäherungsgebiet
- 38: Kreisbogenabschnitt
- 39: Flugkörper
- 40: Beginn des Verfahrens
- 42: Beginn des MPG-Zyklus/Missionsplanungszyklus
- 44: Abfrage: Erster MPG-Zyklus/Missionsplanungszyklus?
- 46: Initialisierung der Steuergrößen
- 48: Prädiktor
- 50: Übernahme der Steuergrößen
- 52: Abfrage: Liegen neue Zieldaten vor?
- 54: Initialisierung der Prädiktion
- 56: Berechnung der Prädiktionsschrittweite
- 58: Setzen eines neuen Prädiktionsschritts
- 60: Abfrage: Naheste Annäherung erreicht?
- 62: Berechnung der Gütefunktion
- 64: Abfrage: Temporäres Güteoptimum erreicht?
- 66: Abfrage: Abbruchkriterium erreicht?
- 68: Steuergrößen variieren, Beginn erneuter Durchlauf des Planungszyklus
- 70: Planungszyklus beendet. Neuer Durchlauf des MPG-Zyklus
- 72: Wartezeit
- 74: Prädiktionsschritt
- 76: Abschnitt
- 78: Abfrage: Mission ausführbar?
- 80: Ende des Verfahrens
- G: Querbeschleunigung
- T_{go}: Restflugzeit
- ΔT: Prädiktionsschrittweite

## Patentansprüche

1. Verfahren zur Midcourse-Lenkung eines Bodenzielflugkörpers (2) zum Bekämpfen eines als Seeziel oder landgestütztes Bodenziel ausgeführten Ziels (14), der durch ein im Schub steuerbares Triebwerk (4) angetriebenen ist, zum Bekämpfen des Ziels (14), bei dem in einem Planungszyklus
a) eine Prädiktion einer möglichen Flugbahn (18) des Flugkörpers (2) mit einem Prädiktor (48), der ein oder mehrere Funktionen und mathematische Größen enthält, die eine Flugbahn (18) mathematisch beschreiben, ausgehend vom aktuellen Flugpunkt erstellt wird und die Flugbahn (18) bewertet wird (62),
b) weitere Prädiktionen möglicher Flugbahnen (18) des Flugkörpers (2) zum Ziel (14) berechnet werden durch mehrfache Variationen (68) von Steuergrößen des Flugkörpers (2), wobei die Flugbahnen (18) jeweils bewertet werden (62), wobei bei diesen weiteren Prädiktionen möglicher Flugbahnen (18) die Flughöhe als Funktion über zumindest einen Teil der Flugstrecke zum Ziel (14) als Steuergröße variiert wird (68), wobei zur Variation ein Suchverfahren verwendet wird, das die Variation der Flughöhe als Hauptvariationsparameter verwendet, und
c) anhand der Bewertungen eine der Flugbahnen (18) des Flugkörpers (2) ausgewählt wird, wobei in die Bewertung mit einfließt, wie viel Treibstoff für das Triebwerk (4) in einem Annäherungsgebiet (36) des Flugkörpers (2) um das Ziel (14) rechnerisch noch übrig ist, und
ein erstes Teilstück (22) dieser Flugbahn (18) abgeflogen und der Planungszyklus mehrfach für nachfolgende Teilstücke (22) wiederholt wird, wobei während des Flugs eine Missionsplanung bei sich während des Flugs zum Ziel (14) ändernden, Randbedingungen durchgeführt wird, in der ermittelt wird, ob die Mission am Ziel mit dem vorhandenen Treibstoff möglich ist (78), und wenn sie nicht möglich ist, die Planungsphase unter veränderten Randbedingungen erneut ausgeführt wird, wobei auf dem Flug des Flugkörpers (2) zum Ziel (14) ein Umfliegen einer No Fly Zone (34) als Randbedingung vorgegeben ist, wobei die Flughöhe als Steuergröße im Planungszyklus beim prädizierten Flug an der No Fly Zone (34) vorbei variiert wird (68).

2. Verfahren nach Anspruch 1,
**dadurch gekennzeichnet,**
**dass** in einer Missionsplanung vor dem Flug ermittelt wird, ob die Mission am Ziel (14) mit dem vorhandenen Treibstoff möglich ist (78), und wenn sie nicht möglich ist, der Planungszyklus unter veränderten, von der Flugkörperlenkung unabhängigen Randbedingungen erneut ausgeführt wird.

3. Verfahren nach Anspruch 1 oder 2,
**dadurch gekennzeichnet,**
**dass** die Randbedingungen zumindest eine von folgenden Randbedingungen umfassen:
- Auf dem Weg vom Startpunkt (32) zum Ziel (14) anzufliegende Wegpunkte.
- Eine vorgegebene Flughöhe auf dem Weg vom Startpunkt (32) zum Ziel (14).
- Eine vorgegebene Annäherungsgeschwindigkeit des Flugkörpers (2) ans Ziel (14).
- Vorhandener Resttreibstoff bei der Annäherung.

4. Verfahren nach einem der vorhergehenden Ansprüche,
**dadurch gekennzeichnet,**
**dass** bei einer lateralen Richtungsänderung der Flugbahn (18) in der Midcourse-Phase bei der Variation der Flugbahnen (18) die Querbeschleunigung (G) bis zu einem nachfolgenden geradlinigen Flug unter einem Midcourse-Grenzwert und konstant gehalten wird.

5. Verfahren nach einem der vorhergehenden Ansprüche,
**dadurch gekennzeichnet,**
**dass** in die Bewertung ein Risiko eines Erlöschens des Triebwerks (4) mit eingeht.

6. Verfahren nach einem der vorhergehenden Ansprüche,
**dadurch gekennzeichnet,**
**dass** bei der Bewertung eine Radarortung des Flugkörpers (2) durch das Ziel (14) und/oder eine das Ziel (14) schützende Einheit berücksichtigt wird.

7. Verfahren nach einem der vorhergehenden Ansprüche,
**dadurch gekennzeichnet,**
**dass** in die Bewertung eine Entfernung eines Abtauchens in eine Tiefflug-Phase zum Ziel (14) eingeht.

8. Verfahren nach einem der vorhergehenden Ansprüche,
**dadurch gekennzeichnet,**
**dass** der Flugkörper (2) mit anderen Flugkörpern (39) vernetzt ist und in die Bewertung die Einhaltung einer gemeinsamen Ankunftszeit der Flugköper (2, 39) im Ziel (14) eingeht.

9. Verfahren nach einem der vorhergehenden Ansprüche,
**dadurch gekennzeichnet,**
**dass** der Flugkörper (2) mit anderen Flugkörpern (39) vernetzt ist und in die Bewertung die Einhaltung einer mit den anderen Flugkörpern (39) abgestimmten Ankunftsrichtung im Annäherungsgebiet (36) eingeht.

10. Verfahren nach einem der vorhergehenden Ansprüche,
**dadurch gekennzeichnet,**
**dass** in die Bewertung eine Geschwindigkeit des Flugkörpers (2) im Ziel (14) eingeht, wobei in der Bewertung ein Geschwindigkeitsquantum gleichgesetzt wird mit einer vorbestimmten Treibstoffmenge.

11. Bodenzielflugkörper (2) zum Bekämpfen eines als Seeziel oder landgestütztes Bodenziel ausgeführten Ziels (14) mit einem in seinem Schub steuerbaren Triebwerk (4) und einer Steuereinheit (10), die dazu vorbereitet ist, einen Flug zum Ziel (14) innerhalb einer Midcourse-Phase des Flugs zu lenken und in einem Planungszyklus
a) eine Prädiktion einer möglichen Flugbahn (18) des Flugkörpers (2) mit einem Prädiktor (48), der ein oder mehrere Funktionen und mathematische Größen enthält, die eine Flugbahn (18) mathematisch beschreiben, ausgehend vom aktuellen Flugpunkt zu erstellen und die Flugbahn (18) zu bewerten (62),
b) weitere Prädiktionen möglicher Flugbahnen (18) des Flugkörpers (2) zum Ziel (14) zu berechnen durch mehrfache Variationen (68) von Steuergrößen des Flugkörpers (2), wobei die Flugbahnen (18) jeweils bewertet werden (62), wobei bei diesen weiteren Prädiktionen möglicher Flugbahnen (18) die Flughöhe als Funktion über zumindest einen Teil der Flugstrecke zum Ziel (14) als Steuergröße variiert wird (68), wobei zur Variation ein Suchverfahren verwendet wird, das die Variation der Flughöhe als Hauptvariationsparameter verwendet, und
c) anhand der Bewertungen eine der Flugbahnen (18) des Flugkörpers (2) auszuwählen, wobei in die Bewertung mit einfließt, wie viel Treibstoff für das Triebwerk (4) in einem Annäherungsgebiet (36) des Flugkörpers (2) um das Ziel (14) rechnerisch noch übrig ist, und
sowie eine Lenkung zum Fliegen entlang eines ersten Teilstücks (22) dieser Flugbahn (18) zu steuern, und den Planungszyklus mehrfach für nachfolgendeTeilstücke (22) zu wiederholen, wobei die Steuerung weiterhin dazu vorbereitet ist, während des Flugs eine Missionsplanung bei sich während des Flugs zum Ziel (14) ändernden, Randbedingungen durchzuführen, in der ermittelt wird, ob die Mission am Ziel mit dem vorhandenen Treibstoff möglich ist (78), und wenn sie nicht möglich ist, die Planungsphase unter veränderten Randbedingungen erneut auszuführen, wobei auf dem Flug des Flugkörpers (2) zum Ziel (14) ein Umfliegen einer No Fly Zone (34) als Randbedingung vorgegeben ist, wobei die Flughöhe als Steuergröße im Planungszyklus beim prädizierten Flug an der No Fly Zone (34) vorbei variiert wird (68).

## Claims

1. Method for the midcourse guidance of a ground target missile (2) for combating a target (14) in the form of a sea target or land-based ground target, which missile is driven by a thrust-controllable engine (4), for combating the target (14), in which in a planning cycle
a) a prediction of a possible trajectory (18) of the missile (2) is created from the current flying point using a predictor (48) containing one or more functions and mathematical variables that mathematically describe a trajectory (18), and the trajectory (18) is evaluated (62),
b) further predictions of possible trajectories (18) of the missile (2) to the target (14) are calculated by way of multiple variations (68) of control variables of the missile (2), wherein the trajectories (18) are each evaluated (62), wherein, in these further predictions of possible trajectories (18), the flight altitude is varied (68) as a function over at least a part of the flight route to the target (14) as a control variable, wherein a search method that uses the variation in the flight altitude as the main variation parameter is used for variation, and
c) one of the trajectories (18) of the missile (2) is selected on the basis of the evaluations, wherein the evaluation includes how much fuel still computationally remains for the engine (4) in an approach area (36) of the missile (2) around the target (14), and
a first section (22) of this trajectory (18) is flown and the planning cycle is repeated several times for subsequent sections (22), wherein mission planning is carried out during the flight for boundary conditions that change during the flight to the destination (14), in which it is determined whether the mission at the target is possible (78) with the available fuel and, if it is not possible, the planning phase is carried out again under changed boundary conditions, wherein flying around a no-fly zone (34) is specified as a boundary condition on the flight of the missile (2) to the target (14), wherein the flight altitude is varied (68) as the control variable in the planning cycle for the predicted flight past the no-fly zone (34).

2. Method according to Claim 1,
**characterized**
**in that**, in pre-flight mission planning, it is determined whether the mission at the target (14) is possible (78) with the available fuel and, if it is not possible, the planning cycle is carried out again under changed boundary conditions independent of the missile guidance.

3. Method according to Claim 1 or 2,
**characterized**
**in that** the boundary conditions include at least one of the following boundary conditions:
- waypoints to be approached on the way from the starting point (32) to the target (14);
- a predefined flight altitude on the way from the starting point (32) to the target (14);
- a predefined approach speed of the missile (2) to the target (14);
- residual fuel present when approaching.

4. Method according to one of the preceding claims,
**characterized**
**in that**, in the case of a lateral change in direction of the trajectory (18) in the midcourse phase, the lateral acceleration (G) up to a subsequent straight-line flight is kept below a midcourse limit value and constant during the variation of the trajectories (18).

5. Method according to one of the preceding claims,
**characterized**
**in that** the evaluation includes a risk of the engine (4) being extinguished.

6. Method according to one of the preceding claims,
**characterized**
**in that** the evaluation takes into account radar locating of the missile (2) by the target (14) and/or a unit protecting the target (14).

7. Method according to one of the preceding claims,
**characterized**
**in that** the evaluation includes a distance of a dive into a low-flying phase to the target (14).

8. Method according to one of the preceding claims,
**characterized**
**in that** the missile (2) is networked with other missiles (39) and the evaluation includes compliance with a common time of arrival of the missiles (2, 39) at the target (14).

9. Method according to one of the preceding claims,
**characterized**
**in that** the missile (2) is networked with other missiles (39) and the evaluation includes compliance with a direction of arrival in the approach area (36) that is coordinated with the other missiles (39).

10. Method according to one of the preceding claims,
**characterized**
**in that** the evaluation includes a speed of the missile (2) at the target (14), wherein a speed quantum is equated with a predetermined amount of fuel in the evaluation.

11. Ground target missile (2) for combating a target (14) in the form of a sea target or land-based ground target, with a thrust-controllable engine (4) and a control unit (10) prepared to guide a flight to the target (14) within a midcourse phase of the flight and in a planning cycle
a) to create a prediction of a possible trajectory (18) of the missile (2) from the current flying point using a predictor (48) containing one or more functions and mathematical variables that mathematically describe a trajectory (18), and to evaluate (62) the trajectory (18),
b) to calculate further predictions of possible trajectories (18) of the missile (2) to the target (14) by way of multiple variations (68) of control variables of the missile (2), wherein the trajectories (18) are each evaluated (62), wherein, in these further predictions of possible trajectories (18), the flight altitude is varied (68) as a function over at least a part of the flight route to the target (14) as a control variable, wherein a search method that uses the variation in the flight altitude as the main variation parameter is used for variation, and
c) to select one of the trajectories (18) of the missile (2) on the basis of the evaluations, wherein the evaluation includes how much fuel still computationally remains for the engine (4) in an approach area (36) of the missile (2) around the target (14), and
to control guidance for flying along a first section (22) of this trajectory (18), and to repeat the planning cycle several times for subsequent sections (22), wherein the control is further prepared to carry out mission planning during the flight for boundary conditions that change during the flight to the target (14), in which it is determined whether the mission at the target is possible (78) with the available fuel and, if it is not possible, to carry out the planning phase again under changed boundary conditions, wherein flying around a no-fly zone (34) is specified as a boundary condition on the flight of the missile (2) to the target (14), wherein the flight altitude is varied (68) as the control variable in the planning cycle for the predicted flight past the no-fly zone (34).

## Revendications

1. Procédé de guidage en vol intermédiaire d'un missile (2) à cible terrestre, destiné à combattre une cible (14) conçue comme cible maritime ou cible terrestre et propulsé par un moteur à poussée contrôlée (4), afin de combattre la cible (14), dans lequel, dans un cycle de planification,
a) une prédiction d'une trajectoire de vol (18) possible du missile (2) à l'aide d'un prédicteur (48), qui contient une ou plusieurs fonctions et grandeurs mathématiques, qui décrivent mathématiquement une trajectoire de vol (18), est établie partant du point de vol actuel et la trajectoire de vol (18) est évaluée (62),
b) d'autres prédictions de trajectoires de vol (18) possibles du missile (2) jusqu'à la cible (14) sont calculées par de multiples variations (68) de grandeurs de commande du missile (2), les trajectoires de vol (18) étant à chaque fois évaluées (62), la hauteur de vol étant variée (68), comme grandeur de commande, comme fonction sur au moins une partie de l'itinéraire jusqu'à la cible (14) lors de ces autres prédictions de trajectoires de vol (18) possibles, une méthode de recherche étant utilisée pour la variation, laquelle méthode utilise la variation de la hauteur de vol comme paramètre de variation principal et
c) à l'aide des évaluations, l'une des trajectoires de vol (18) du missile (2) est choisie, l'évaluation intégrant la quantité de carburant qui reste encore mathématiquement pour le moteur (4) dans une zone d'approche (36) du missile (2) autour de la cible (14) et
un premier tronçon (22) de cette trajectoire de vol (18) est parcourue et le cycle de planification est répété plusieurs fois pour les tronçons (22) suivants, une planification de mission étant réalisée pendant le vol à des conditions limites qui changent pendant le vol jusqu'à la cible (14), dans laquelle planification on détermine si la mission au niveau de la cible est possible avec le carburant présent (78) et, lorsqu'elle n'est pas possible, la phase de planification est réexécutée aux conditions limites changées, un contournement d'une zone interdite de survol (34) étant spécifié comme condition limite sur le vol du missile (2) jusqu'à la cible (14), la hauteur de vol étant variée (68) comme grandeur de commande dans le cycle de planification lors du vol prédit au-delà de la zone interdite de survol (34).

2. Procédé selon la revendication 1,
**caractérisé**
**en ce qu'**on détermine dans une planification de mission avant le vol si la mission au niveau de la cible (14) est possible avec le carburant présent (78) et, lorsqu'elle n'est pas possible, le cycle de planification est réexécuté à des conditions limites changées, indépendantes du guidage du missile.

3. Procédé selon la revendication 1 ou 2,
**caractérisé**
**en ce que** les conditions limites comprennent au moins l'une des conditions limites suivantes :
- des points de cheminement à survoler sur le trajet depuis le point de départ (32) jusqu'à la cible (14);
- une hauteur de vol spécifiée sur le trajet depuis le point de départ (32) jusqu'à la cible (14);
- une vitesse d'approche spécifiée du missile (2) au niveau de la cible (14);
- le carburant résiduel présent lors de l'approche.

4. Procédé selon l'une des revendications précédentes, **caractérisé**
**en ce que** lors d'une modification latérale de la direction de la trajectoire de vol (18) dans la phase de vol intermédiaire lors de la variation des trajectoires de vol (18), l'accélération latérale (G) est maintenue en-dessous d'une valeur limite de vol intermédiaire et constante jusqu'à un vol rectiligne ultérieur.

5. Procédé selon l'une des revendications précédentes, **caractérisé**
**en ce qu'**un risque d'un arrêt du moteur (4) est intégré dans l'évaluation.

6. Procédé selon l'une des revendications précédentes, **caractérisé**
**en ce que** lors de l'évaluation, une détection radar du missile (2) par la cible (14) et/ou une unité protégeant la cible (14) est prise en considération.

7. Procédé selon l'une des revendications précédentes, **caractérisé**
**en ce que** l'évaluation intègre une distance d'une plongée dans une phase de vol à basse altitude jusqu'à la cible (14).

8. Procédé selon l'une des revendications précédentes, **caractérisé**
**en ce que** le missile (2) est mis en réseau avec d'autres missiles (39) et l'évaluation intègre le respect d'un temps d'arrivée commun des missiles (2, 39) sur la cible (14).

9. Procédé selon l'une des revendications précédentes, **caractérisé**
**en ce que** le missile (2) est mis en réseau avec d'autres missiles (39) et l'évaluation intègre le respect d'une direction d'arrivée dans la zone d'approche (36) coordonnée avec les autres missiles (39).

10. Procédé selon l'une des revendications précédentes, **caractérisé**
**en ce que** l'évaluation intègre une vitesse du missile (2) dans la cible (14), un quantum de vitesse étant assimilé à une quantité de carburant spécifiée dans l'évaluation.

11. Missile (2) à cible terrestre destiné à combattre une cible (14) conçue en tant que cible maritime ou cible terrestre, présentant un moteur à poussée contrôlée (4) et une unité de commande (10) qui est préparée pour guider un vol jusqu'à la cible (14) dans une phase de vol intermédiaire du vol et, dans un cycle de planification
a) pour établir une prédiction d'une trajectoire de vol (18) possible du missile (2) à l'aide d'un prédicteur (48), qui contient une ou plusieurs fonctions et grandeurs mathématiques, qui décrivent mathématiquement une trajectoire de vol (18), est établie partant du point de vol actuel et pour évaluer la trajectoire de vol (18) (62),
b) pour calculer d'autres prédictions de trajectoires de vol (18) possibles du missile (2) jusqu'à la cible (14) par de multiples variations (68) de grandeurs de commande du missile (2), les trajectoires de vol (18) étant à chaque fois évaluées (62), la hauteur de vol étant variée (68), comme grandeur de commande, comme fonction sur au moins une partie de l'itinéraire jusqu'à la cible (14) lors de ces autres prédictions de trajectoire de vol (18) possibles, une méthode de recherche étant utilisée pour la variation, laquelle méthode utilise la variation de la hauteur de vol comme paramètre de variation principal et
c) à l'aide des évaluations, pour choisir l'une des trajectoires de vol (18) du missile (2), l'évaluation incorporant la quantité de carburant qui reste encore mathématiquement pour le moteur (4) dans une zone d'approche (36) du missile (2) de la cible (14) et
ainsi que pour commander un guidage le long d'un premier tronçon (22) de cette trajectoire de vol (18) et pour répéter le cycle de planification plusieurs fois pour les tronçons (22) suivants, la commande étant en outre préparée pour réaliser une planification de mission pendant le vol à des conditions limites qui changent pendant le vol jusqu'à la cible (14), dans laquelle on détermine si la mission au niveau de la cible est possible avec le carburant présent (78) et, lorsqu'elle n'est pas possible, pour réexécuter la phase de planification est aux conditions limites changées, un contournement d'une zone interdite de survol (34) étant spécifié comme condition limite sur le vol du missile (2) jusqu'à la cible (14), la hauteur de vol étant variée (68) comme grandeur de commande dans le cycle de planification lors du vol prédit au-delà de la zone interdite de survol (34).
